(19) Europäisches Patentamt
European Patent Office
Office européen des brevets

(11) **EP 4 564 810 A1**

(12) **EUROPEAN PATENT APPLICATION**
published in accordance with Art. 153(4) EPC

(43) Date of publication:
**04.06.2025 Bulletin 2025/23**

(21) Application number: **23847027.2**

(22) Date of filing: **27.07.2023**

(51) International Patent Classification (IPC):
**H04N 19/11** (2014.01)   **H04N 19/593** (2014.01)
**H04N 19/59** (2014.01)   **H04N 19/70** (2014.01)
**H04N 19/117** (2014.01)   **H04N 19/176** (2014.01)
**H04N 19/105** (2014.01)   **H04N 19/132** (2014.01)

(52) Cooperative Patent Classification (CPC):
**H04N 19/105; H04N 19/11; H04N 19/117;**
**H04N 19/132; H04N 19/176; H04N 19/59;**
**H04N 19/593; H04N 19/70**

(86) International application number:
**PCT/KR2023/010968**

(87) International publication number:
**WO 2024/025371 (01.02.2024 Gazette 2024/05)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **27.07.2022 KR 20220092888**
**08.08.2022 KR 20220098309**

(71) Applicant: **LG Electronics Inc.**
**Yeongdeungpo-gu**
**Seoul 07336 (KR)**

(72) Inventors:
• **YOO, Sunmi**
**Seoul 06772 (KR)**
• **CHOI, Jangwon**
**Seoul 06772 (KR)**
• **CHOI, Jungah**
**Seoul 06772 (KR)**

(74) Representative: **Maikowski & Ninnemann**
**Patentanwälte Partnerschaft mbB**
**Postfach 15 09 20**
**10671 Berlin (DE)**

(54) **IMAGE ENCODING/DECODING METHOD AND DEVICE, AND RECORDING MEDIUM IN WHICH BITSTREAM IS STORED**

(57)   An image decoding/encoding method and device according to the present disclosure may derive an intra prediction mode of a current block, construct reference samples of the current block, generate a prediction sample of the current block based on the intra prediction mode and the reference samples, and decode/encode the current block based on the prediction sample of the current block.

FIG.4

| DERIVE INTRA PREDICTION MODE | ～S400 |

↓

| CONSTRUCT REFERENCE SAMPLE | ～S410 |

↓

| GENERATE PREDICTION SAMPLE | ～S420 |

EP 4 564 810 A1

**Description**

[Technical Field]

The present disclosure relates to an image encoding/decoding method and device, and a recording medium having a bitstream stored therein.

[Background Art]

Recently, the demand for high-resolution and high-quality images such as HD (High Definition) images and UHD (Ultra High Definition) images has been increasing in various application fields, and accordingly, highly efficient image compression technologies are being discussed.

There are a variety of technologies such as inter-prediction technology that predicts a pixel value included in a current picture from a picture before or after a current picture with video compression technology, intra-prediction technology that predicts a pixel value included in a current picture by using pixel information in a current picture, entropy coding technology that allocates a short sign to a value with high appearance frequency and a long sign to a value with low appearance frequency, etc. and these image compression technologies may be used to effectively compress image data and transmit or store it.

[Disclosure]

[Technical Problem]

The present disclosure is directed to providing a method and device for defining various planar modes and performing prediction based on the planar modes.

The present disclosure is directed to providing a method and device for deriving the planar mode using decoder side intra mode derivation (DIMD).

The present disclosure is directed to providing a method and device for deriving the planar mode based on template matching.

[Technical Solution]

An image decoding method and device according to the present disclosure derives an intra prediction mode of a current block, constructs reference samples of the current block, and generates a prediction sample of the current block based on the intra prediction mode and the reference samples.

In the image decoding method and device according to the present disclosure, the intra prediction mode may be derived from a plurality of predefined intra prediction modes.

In the image decoding method and device according to the present disclosure, the plurality of predefined intra prediction modes may include a normal planar mode, a horizontal planar mode, and a vertical planar mode.

In the image decoding method and device according to the present disclosure, the horizontal planar mode may represent a mode for generating a prediction sample of a current sample in the current block using a horizontal sample and an upper-right sample of the current sample, the horizontal sample may represent a sample horizontally adjacent to the current sample among the reference samples, and the upper-right sample may represent a sample adjacent to an upper-right corner of the current block among the reference samples.

In the image decoding method and device according to the present disclosure, the vertical planar mode may represent a mode for generating a prediction sample of a current sample in the current block using a vertical sample and a lower-left sample of the current sample, and the vertical sample may represent a sample vertically adjacent to the current sample among the reference samples, and the lower-left sample may represent a sample adjacent to a lower-left corner of the current block among the reference samples.

The image decoding method and device according to the present disclosure may obtain a first flag indicating whether the normal planar mode is used for the current block.

The image decoding method and device according to the present disclosure may obtain a second flag indicating an intra prediction mode used for the current block among the horizontal planar mode or the vertical planar mode when the first flag indicates that the normal planar mode is not used for the current block.

In the image decoding method and device according to the present disclosure, whether to obtain the first flag may be determined based on whether intra sub-partitions (ISP) are applied to the current block.

The image decoding method and device according to the present disclosure may derive an intra derivation mode based on decoder-side intra mode derivation (DIMD) and select one of the horizontal planar mode and the vertical planar mode based on the intra derivation mode.

In the image decoding method and device according to the present disclosure, when the intra derivation mode is a horizontal directional mode, the intra prediction mode of the current block may be derived as the horizontal planar mode, and when the intra derivation mode is a vertical directional mode, the intra prediction mode of the current block may be derived as the vertical planar mode.

The image decoding method and device according to the present disclosure may sort an order of the plurality of predefined intra prediction modes based on a cost calculated by a template matching method.

An image encoding method and device according to the present disclosure derives an intra prediction mode of a current block, constructs reference samples of the current block, and generates a prediction sample of the current block based on the intra prediction mode and the reference samples.

In the image encoding method and device according to the present disclosure, the intra prediction mode may be derived from a plurality of predefined intra prediction modes.

In the image encoding method and device according to the present disclosure, the plurality of predefined intra prediction modes may include a normal planar mode, a horizontal planar mode, and a vertical planar mode.

In the image encoding method and device according to the present disclosure, the horizontal planar mode may represent a mode for generating a prediction sample of a current sample in the current block using a horizontal sample and an upper-right sample of the current sample, and the horizontal sample may represent a sample horizontally adjacent to the current sample among the reference samples, and the upper-right sample may represent a sample adjacent to an upper-right corner of the current block among the reference samples.

In the image encoding method and device according to the present disclosure, the vertical planar mode may represent a mode for generating a prediction sample of a current sample in the current block using a vertical sample and a lower-left sample of the current sample, the vertical sample may represent a sample vertically adjacent to the current sample among the reference samples, and the lower-left sample may represent a sample adjacent to a lower-left corner of the current block among the reference samples.

The image encoding method and device according to the present disclosure may obtain a first flag indicating whether the normal planar mode is used for the current block.

The image encoding method and device according to the present disclosure may obtain a second flag indicating an intra prediction mode used for the current block among the horizontal planar mode or the vertical planar mode when the first flag indicates that the normal planar mode is not used for the current block.

In the image encoding method and device according to the present disclosure, whether to obtain the first flag may be determined based on whether intra sub-partitions (ISP) are applied to the current block.

The image encoding method and device according to the present disclosure may derive an intra derivation mode based on DIMD and select one of the horizontal planar mode and the vertical planar mode based on the intra derivation mode.

In the image encoding method and device according to the present disclosure, when the intra derivation mode is a horizontal directional mode, the intra prediction mode of the current block may be derived as the horizontal planar mode, and when the intra derivation mode is a vertical directional mode, the intra prediction mode of the current block may be derived as the vertical planar mode.

The image encoding method and device according to the present disclosure may sort an order of the plurality of predefined intra prediction modes based on a cost calculated by a template matching method.

There is provided a computer-readable digital storage medium in which encoded video/image information that causes a decoding device according to the present disclosure to perform an image decoding method is stored.

There is provided a computer-readable digital storage medium in which video/image information generated according to an image encoding method according to the present disclosure is stored.

There is provided a method and device for transmitting video/image information generated according to an image encoding method according to the present disclosure.

[Advantageous Effects]

According to the present disclosure, by defining various planar modes and performing prediction based on the planar modes, more diverse prediction methods can be considered for prediction, the accuracy of prediction can be increased, and compression performance can be improved.

According to the present disclosure, by effectively deriving planar modes using decoder side intra mode derivation (DIMD), signaling overhead can be reduced and compression efficiency can be improved.

According to the present disclosure, by effectively deriving planar modes based on template matching, signaling overhead can be reduced and compression efficiency can be improved.

[Description of Drawings]

FIG. 1 is a video/image coding system according to the present disclosure.

FIG. 2 is a rough block diagram of an encoding apparatus to which an embodiment of the present disclosure may be applied and encoding of a video/image signal is performed.

FIG. 3 is a rough block diagram of a decoding apparatus to which an embodiment of the present disclosure may be applied and decoding of a video/image signal is performed.

FIG. 4 illustrates an intra prediction method performed by the decoding device 300 according to an embodiment of the present disclosure.

FIG. 5 is a diagram for describing a template matching-based prediction mode determination method according to an embodiment of the present disclosure.

FIG. 6 illustrates a schematic configuration of an intra prediction unit 331 that performs an intra prediction method according to the present disclosure.

FIG. 7 illustrates an intra prediction method performed by the encoding device 200 according to an embodiment of the present disclosure.

FIG. 8 schematically illustrates a configuration of the intra prediction unit 222 that performs an inter prediction method according to the present disclosure.

FIG. 9 is an example of a contents streaming system to which embodiments of the present disclosure may be applied.

[Modes of the Invention]

Since the present disclosure may make various changes and have several embodiments, specific embodiments will be illustrated in a drawing and described in detail in a detailed description. However, it is not intended to limit the present disclosure to a specific embodiment, and should be understood to include all changes, equivalents and substitutes included in the spirit and technical scope of the present disclosure. While describing each drawing, similar reference numerals are used for similar components.

A term such as first, second, etc. may be used to describe various components, but the components should not be limited by the terms. The terms are used only to distinguish one component from other components. For example, a first component may be referred to as a second component without departing from the scope of a right of the present disclosure, and similarly, a second component may also be referred to as a first component. A term of and/or includes any of a plurality of related stated items or a combination of a plurality of related stated items.

When a component is referred to as "being connected" or "being linked" to another component, it should be understood that it may be directly connected or linked to another component, but another component may exist in the middle. On the other hand, when a component is referred to as "being directly connected" or "being directly linked" to another component, it should be understood that there is no another component in the middle.

A term used in this application is just used to describe a specific embodiment, and is not intended to limit the present disclosure. Singular expressions include plural expressions unless the context clearly dictates otherwise. In this application, it should be understood that a term such as "include" or "have", etc. is intended to designate the presence of features, numbers, steps, operations, components, parts or combinations thereof described in the specification, but does not exclude in advance the possibility of presence or addition of one or more other features, numbers, steps, operations, components, parts or combinations thereof.

The present disclosure relates to video/image coding. For example, a method/an embodiment disclosed herein may be applied to a method disclosed in the versatile video coding (VVC) standard. In addition, a method/an embodiment disclosed herein may be applied to a method disclosed in the essential video coding (EVC) standard, the AOMedia Video 1 (AV1) standard, the 2nd generation of audio video coding standard (AVS2) or the next-generation video/image coding standard (ex.H.267 or H.268, etc.).

This specification proposes various embodiments of video/image coding, and unless otherwise specified, the embodiments may be performed in combination with each other.

Herein, a video may refer to a set of a series of images over time. A picture generally refers to a unit representing one image in a specific time period, and a slice/a tile is a unit that forms part of a picture in coding. A slice/a tile may include at least one coding tree unit (CTU). One picture may consist of at least one slice/tile. One tile is a rectangular region composed of a plurality of CTUs within a specific tile column and a specific tile row of one picture. A tile column is a rectangular region of CTUs having the same height as that of a picture and a width designated by a syntax requirement of a picture parameter set. A tile row is a rectangular region of CTUs having a height designated by a picture parameter set and the same width as that of a picture. CTUs within one tile may be arranged consecutively according to CTU raster scan, while tiles within one picture may be arranged consecutively according to raster scan of a tile. One slice may include an integer number of complete tiles or an integer number of consecutive complete CTU rows within a tile of a picture that may be included exclusively in a single NAL unit. Meanwhile, one picture may be divided into at least two sub-pictures. A sub-picture may be a rectangular region of at least one slice within a picture.

A pixel or a pel may refer to the minimum unit that constitutes one picture (or image). In addition, 'sample' may be used as a term corresponding to a pixel. A sample may generally represent a pixel or a pixel value, and may represent only a pixel/a pixel value of a luma component, or only a pixel/a pixel value of a chroma component.

A unit may represent a basic unit of image processing. A unit may include at least one of a specific region of a picture and information related to a corresponding region. One unit may include one luma block and two chroma (ex. cb, cr) blocks. In some cases, a unit may be used interchangeably with a term such as a block or an region, etc. In a general case, a MxN block may include a set (or an array) of transform coefficients or samples (or sample arrays) consisting of M columns and N rows.

Herein, "A or B" may refer to "only A", "only B" or "both A and B." In other words, herein, "A or B" may be interpreted as "A and/or B." For example, herein, "A, B or C" may refer to "only A", "only B", "only C" or "any combination of A, B and C)".

A slash (/) or a comma used herein may refer to "and/or." For example, "A/B" may refer to "A and/or B." Accordingly, "A/B" may refer to "only A", "only B" or "both A and B." For example, "A, B, C" may refer to "A, B, or C".

Herein, "at least one of A and B" may refer to "only A", "only B" or "both A and B". In addition, herein, an expression such as "at least one of A or B" or "at least one of A and/or B" may be interpreted in the same way as "at least one of A and B".

In addition, herein, "at least one of A, B and C" may refer to "only A", "only B", "only C", or "any combination of A, B and C". In addition, "at least one of A, B or C" or "at least one of A, B and/or C" may refer to "at least one of A, B and C".

In addition, a parenthesis used herein may refer to "for example." Specifically, when indicated as "prediction (intra prediction)", "intra prediction" may be proposed as an example of "prediction". In other words, "prediction" herein is not limited to "intra prediction" and "intra prediction" may be proposed as an example of "prediction." In addition, even when indicated as "prediction (i.e., intra prediction)", "intra prediction" may be proposed as an example of "prediction."

Herein, a technical feature described individually in one drawing may be implemented individually or simultaneously.

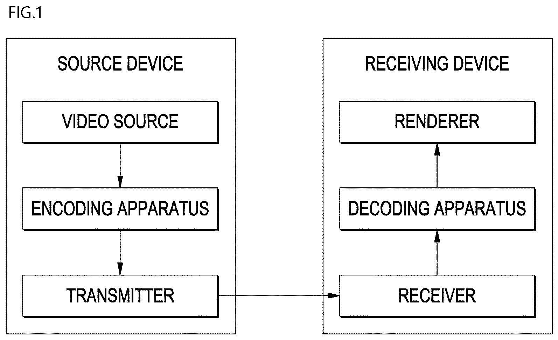

FIG. 1 is a video/image coding system according to the present disclosure.

Referring to FIG. 1, a video/image coding system may include a first device (a source device) and a second device (a receiving device).

A source device may transmit encoded video/image information or data in a form of a file or streaming to a receiving device through a digital storage medium or a network. The source device may include a video source, an encoding apparatus and a transmission unit. The receiving device may include a reception unit, a decoding apparatus and a renderer. The encoding apparatus may be referred to as a video/image encoding apparatus and the decoding apparatus may be referred to as a video/image decoding apparatus. A transmitter may be included in an encoding apparatus. A receiver may be included in a decoding apparatus. A renderer may include a display unit, and a display unit may be composed of a separate device or an external component.

A video source may acquire a video/an image through a process of capturing, synthesizing or generating a video/an image. A video source may include a device of capturing a video/an image and a device of generating a video/an image. A device of capturing a video/an image may include at least one camera, a video/image archive including previously captured videos/images, etc. A device of generating a video/an image may include a computer, a tablet, a smartphone, etc. and may (electronically) generate a video/an image. For example, a virtual video/image may be generated through a computer, etc., and in this case, a process of capturing a video/an image may be replaced by a process of generating related data.

An encoding apparatus may encode an input video/image. An encoding apparatus may perform a series of procedures such as prediction, transform, quantization, etc. for compression and coding efficiency. Encoded data (encoded video/image information) may be output in a form of a bitstream.

A transmission unit may transmit encoded video/image information or data output in a form of a bitstream to a reception unit of a receiving device through a digital storage medium or a network in a form of a file or streaming. A digital storage medium may include various storage media such as USB, SD, CD, DVD, Blu-ray, HDD, SSD, etc. A transmission unit may include an element for generating a media file through a predetermined file format and may include an element for transmission through a broadcasting/communication network. A reception unit may receive/extract the bitstream and transmit it to a decoding apparatus.

A decoding apparatus may decode a video/an image by performing a series of procedures such as dequantization, inverse transform, prediction, etc. corresponding to an operation of an encoding apparatus.

A renderer may render a decoded video/image. A rendered video/image may be displayed through a display unit.

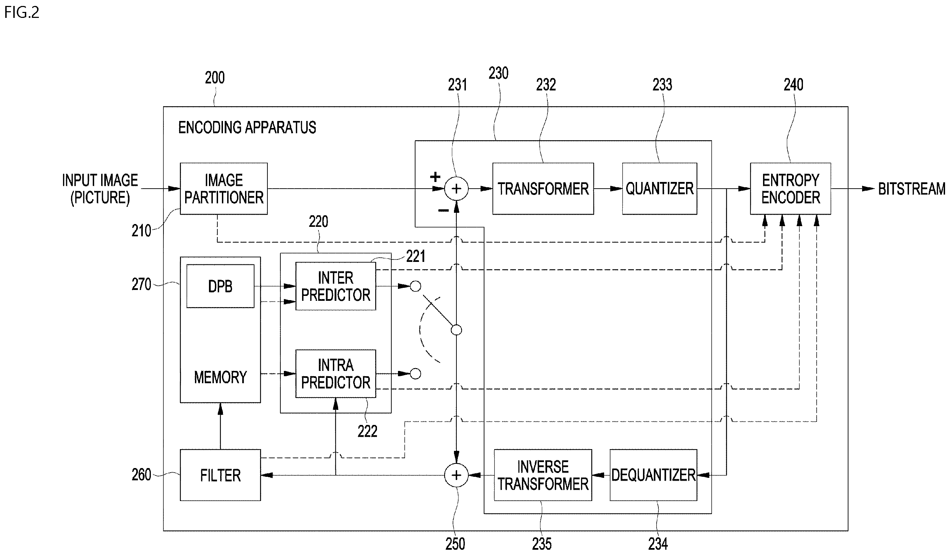

FIG. 2 is a rough block diagram of an encoding apparatus to which an embodiment of the present disclosure may be applied and encoding of a video/image signal is performed.

Referring to FIG. 2, an encoding apparatus 200 may be composed of an image partitioner 210, a predictor 220, a residual processor 230, an entropy encoder 240, an adder 250, a filter 260 and a memory 270. A predictor 220 may include an inter predictor 221 and an intra predictor 222. A residual processor 230 may include a transformer 232, a quantizer 233, a dequantizer 234 and an inverse transformer 235. A residual processor 230 may further include a subtractor 231. An adder 250 may be referred to as a reconstructor or a reconstructed block generator. The above-described image partitioner 210, predictor 220, residual processor 230, entropy encoder 240, adder 250 and filter 260 may be configured by at least one hardware component (e.g., an encoder chipset or a processor) accorrding to an embodiment. In addition, a memory 270 may include a decoded picture buffer (DPB) and may be configured by a digital storage medium. The hardware component may further include a memory 270 as an internal/external component.

An image partitioner 210 may partition an input image (or picture, frame) input to an encoding apparatus 200 into at least one processing unit. As an example, the processing unit may be referred to as a coding unit (CU). In this case, a coding unit may be partitioned recursively according to a quad-tree binary-tree ternary-tree (QTBTTT) structure from a coding tree unit (CTU) or the largest coding unit (LCU).

For example, one coding unit may be partitioned into a plurality of coding units with a deeper depth based on a quad tree structure, a binary tree structure and/or a ternary structure. In this case, for example, a quad tree structure may be applied first and a binary tree structure and/or a ternary structure may be applied later. Alternatively, a binary tree structure may be applied before a quad tree structure. A coding procedure according to this specification may be performed based on a final coding unit that is no longer partitioned. In this case, based on coding efficiency, etc. according to an image characteristic, the largest coding unit may be directly used as a final coding unit, or if necessary, a coding unit may be recursively partitioned into coding units of a deeper depth, and a coding unit with an optimal size may be used as a final coding unit. Here, a coding procedure may include a procedure such as prediction, transform, and reconstruction, etc. described later.

As another example, the processing unit may further include a prediction unit (PU) or a transform unit (TU). In this case, the prediction unit and the transform unit may be divided or partitioned from a final coding unit described above, respectively. The prediction unit may be a unit of sample prediction, and the transform unit may be a unit for deriving a transform coefficient and/or a unit for deriving a residual signal from a transform coefficient.

In some cases, a unit may be used interchangeably with a term such as a block or an region, etc. In a general case, a MxN block may represent a set of transform coefficients or samples consisting of M columns and N rows. A sample may generally represent a pixel or a pixel value, and may represent only a pixel/a pixel value of a luma component, or only a pixel/a pixel value of a chroma component. A sample may be used as a term that makes one picture (or image) correspond to a pixel or a pel.

An encoding apparatus 200 may subtract a prediction signal (a prediction block, a prediction sample array) output from an inter predictor 221 or an intra predictor 222 from an input image signal (an original block, an original sample array) to generate a residual signal (a residual signal, a residual sample array), and a generated residual signal is transmitted to a transformer 232. In this case, a unit that subtracts a prediction signal (a prediction block, a prediction sample array) from an input image signal (an original block, an original sample array) within an encoding apparatus 200 may be referred to as a subtractor 231.

A predictor 220 may perform prediction on a block to be processed (hereinafter, referred to as a current block) and generate a predicted block including prediction samples for the current block. A predictor 220 may determine whether intra prediction or inter prediction is applied in a unit of a current block or a CU. A predictor 220 may generate various information on prediction such as prediction mode information, etc. and transmit it to an entropy encoder 240 as described later in a description of each prediction mode. Information on prediction may be encoded in an entropy encoder 240 and output in a form of a bitstream.

An intra predictor 222 may predict a current block by referring to samples within a current picture. The samples referred to may be positioned in the neighborhood of the current block or may be positioned a certain distance away from the current block according to a prediction mode. In intra prediction, prediction modes may include at least one nondirectional mode and a plurality of directional modes. A nondirectional mode may include at least one of a DC mode or a planar mode. A directional mode may include 33 directional modes or 65 directional modes according to a detail level of a prediction direction. However, it is an example, and more or less directional modes may be used according to a configuration. An intra predictor 222 may determine a prediction mode applied to a current block by using a prediction mode applied to a neighboring block.

An inter predictor 221 may derive a prediction block for a current block based on a reference block (a reference sample array) specified by a motion vector on a reference picture. In this case, in order to reduce the amount of motion information transmitted in an inter prediction mode, motion information may be predicted in a unit of a block, a sub-block or a sample based on the correlation of motion information between a neighboring block and a current block. The motion information may include a motion vector and a reference picture index. The motion information may further include inter prediction direction information (L0 prediction, L1 prediction, Bi prediction, etc.). For inter prediction, a neighboring block may include a spatial neighboring block existing in a current picture and a temporal neighboring block existing in a reference picture. A reference picture including the reference block and a reference picture including the temporal neighboring block may be the same or different. The temporal neighboring block may be referred to as a collocated reference block, a collocated CU (colCU), etc., and a reference picture including the temporal neighboring block may be referred to as a collocated picture (colPic). For example, an inter predictor 221 may configure a motion information candidate list based on neighboring blocks and generate information indicating which candidate is used to derive a motion vector and/or a reference picture index of the current block. Inter prediction may be performed based on various prediction modes, and for example, for a skip mode and a merge mode, an inter predictor 221 may use motion information of a neighboring block as motion information of a current block. For a skip mode, unlike a merge mode, a residual signal may not be transmitted. For a motion vector prediction (MVP) mode, a motion vector of a neighboring block is used as a motion vector predictor and a motion vector difference is signaled to indicate a motion vector of a current block.

A predictor 220 may generate a prediction signal based on various prediction methods described later. For example, a predictor may not only apply intra prediction or inter prediction for prediction for one block, but also may apply intra prediction and inter prediction simultaneously. It may be referred to as a combined inter and intra prediction (CIIP) mode. In addition, a predictor may be based on an intra block copy (IBC) prediction mode or may be based on a palette mode for prediction for a block. The IBC prediction mode or palette mode may be used for content image/video coding of a game, etc. such as screen content coding (SCC), etc. IBC basically performs prediction within a current picture, but it may be performed similarly to inter prediction in that it derives a reference block within a current picture. In other words, IBC may use at least one of inter prediction techniques described herein. A palette mode may be considered as an example of intra coding or intra prediction. When a palette mode is applied, a sample value within a picture may be signaled based on information on a palette table and a palette index. A prediction signal generated through the predictor 220 may be used to generate a reconstructed signal or a residual signal.

A transformer 232 may generate transform coefficients by applying a transform technique to a residual signal. For example, a transform technique may include at least one of Discrete Cosine Transform (DCT), Discrete Sine Transform (DST), Karhunen-Loève Transform (KLT), Graph-Based Transform (GBT) or Conditionally Nonlinear Transform (CNT). Here, GBT refers to transform obtained from this graph when relationship information between pixels is expressed as a graph. CNT refers to transform obtained based on generating a prediction signal by using all previously reconstructed pixels. In addition, a transform process may be applied to a square pixel block in the same size or may be applied to a non-square block in a variable size.

A quantizer 233 may quantize transform coefficients and transmit them to an entropy encoder 240 and an entropy encoder 240 may encode a quantized signal (information on quantized transform coefficients) and output it as a bitstream. Information on the quantized transform coefficients may be referred to as residual information. A quantizer 233 may rearrange quantized transform coefficients in a block form into an one-dimensional vector form based on coefficient scan order, and may generate information on the quantized transform coefficients based on the quantized transform coefficients in the one-dimensional vector form.

An entropy encoder 240 may perform various encoding methods such as exponential Golomb, context-adaptive variable length coding (CAVLC), context-adaptive binary arithmetic coding (CABAC), etc. An entropy encoder 240 may encode information necessary for video/image reconstruction (e.g., a value of syntax elements, etc.) other than quantized transform coefficients together or separately.

Encoded information (ex. encoded video/image information) may be transmitted or stored in a unit of a network abstraction layer (NAL) unit in a bitstream form.. The video/image information may further include information on various parameter sets such as an adaptation parameter set (APS), a picture parameter set (PPS), a sequence parameter set (SPS) or a video parameter set (VPS), etc. In addition, the video/image information may further include general constraint information. Herein, information and/or syntax elements transmitted/signaled from an encoding apparatus to a decoding apparatus may be included in video/image information. The video/image information may be encoded through the above-described encoding procedure and included in the bitstream. The bitstream may be transmitted through a network or may be stored in a digital storage medium. Here, a network may include a broadcasting network and/or a communication network, etc. and a digital storage medium may include various storage media such as USB, SD, CD, DVD, Blu-ray, HDD, SSD, etc. A transmission unit (not shown) for transmitting and/or a storage unit (not shown) for storing a signal output from an entropy encoder 240 may be configured as an internal/external element of an encoding apparatus 200, or a transmission unit may be also included in an entropy encoder 240.

Quantized transform coefficients output from a quantizer 233 may be used to generate a prediction signal. For example, a residual signal (a residual block or residual samples) may be reconstructed by applying dequantization and inverse transform to quantized transform coefficients through a dequantizer 234 and an inverse transformer 235. An adder 250 may add a reconstructed residual signal to a prediction signal output from an inter predictor 221 or an intra predictor 222 to generate a reconstructed signal (a reconstructed picture, a reconstructed block, a reconstructed sample array). When there is no residual for a block to be processed like when a skip mode is applied, a predicted block may be used as a reconstructed block. An adder 250 may be referred to as a reconstructor or a reconstructed block generator. A generated reconstructed signal may be used for intra prediction of a next block to be processed within a current picture, and may be also used for inter prediction of a next picture through filtering as described later. Meanwhile, luma mapping with chroma scaling (LMCS) may be applied in a picture encoding and/or reconstruction process.

A filter 260 may improve subjective/objective image quality by applying filtering to a reconstructed signal. For example, a filter 260 may generate a modified reconstructed picture by applying various filtering methods to a reconstructed picture, and may store the modified reconstructed picture in a memory 270, specifically in a DPB of a memory 270. The various filtering methods may include deblocking filtering, sample adaptive offset, adaptive loop filter, bilateral filter, etc. A filter 260 may generate various information on filtering and transmit it to an entropy encoder 240. Information on filtering may be encoded in an entropy encoder 240 and output in a form of a bitstream.

A modified reconstructed picture transmitted to a memory 270 may be used as a reference picture in an inter predictpr 221. When inter prediction is applied through it, an encoding apparatus may avoid prediction mismatch in an encoding apparatus 200 and a decoding apparatus, and may also improve encoding efficiency.

A DPB of a memory 270 may store a modified reconstructed picture to use it as a reference picture in an inter predictor 221. A memory 270 may store motion information of a block from which motion information in a current picture is derived (or encoded) and/or motion information of blocks in a pre-reconstructed picture. The stored motion information may be transmitted to an inter predictor 221 to be used as motion information of a spatial neighboring block or motion information of a temporal neighboring block. A memory 270 may store reconstructed samples of reconstructed blocks in a current picture and transmit them to an intra predictor 222.

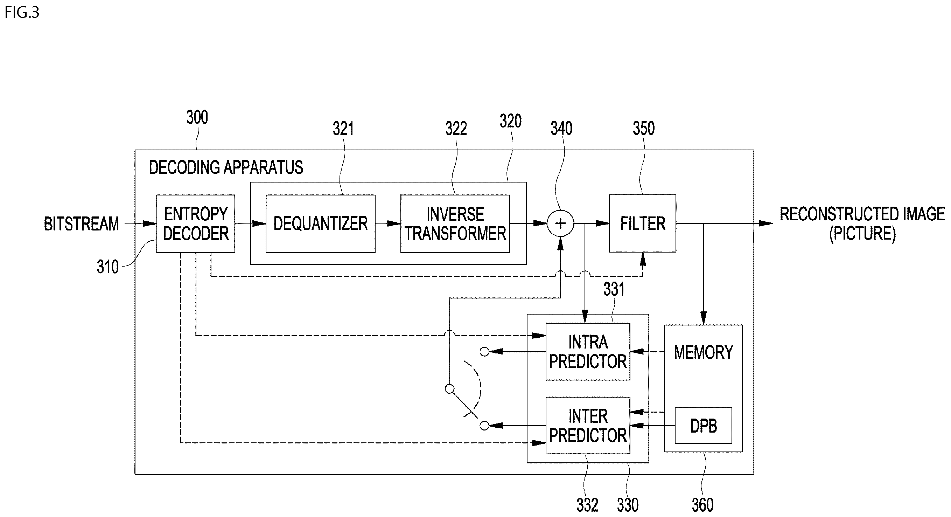

FIG. 3 is a rough block diagram of a decoding apparatus to which an embodiment of the present disclosure may be applied and decoding of a video/image signal is performed.

Referring to FIG. 3, a decoding apparatus 300 may be configured by including an entropy decoder 310, a residual processor 320, a predictor 330, an adder 340, a filter 350 and a memory 360. A predictor 330 may include an inter predictor 332 and an intra predictor 331. A residual processor 320 may include a dequantizer 321 and an inverse transformer 322.

According to an embodiment, the above-described entropy decoder 310, residual processor 320, predictor 330, adder 340 and filter 350 may be configured by one hardware component (e.g., a decoder chipset or a processor). In addition, a memory 360 may include a decoded picture buffer (DPB) and may be configured by a digital storage medium. The hardware component may further include a memory 360 as an internal/external component.

When a bitstream including video/image information is input, a decoding apparatus 300 may reconstruct an image in response to a process in which video/image information is processed in an encoding apparatus of FIG. 2. For example, a decoding apparatus 300 may derive units/blocks based on block partition-related information obtained from the bitstream. A decoding apparatus 300 may perform decoding by using a processing unit applied in an encoding apparatus. Accordingly, a processing unit of decoding may be a coding unit, and a coding unit may be partitioned from a coding tree unit or the large coding unit according to a quad tree structure, a binary tree structure and/or a ternary tree structure. At least one transform unit may be derived from a coding unit. And, a reconstructed image signal decoded and output through a decoding apparatus 300 may be played through a playback device.

A decoding apparatus 300 may receive a signal output from an encoding apparatus of FIG. 2 in a form of a bitstream, and a received signal may be decoded through an entropy decoder 310. For example, an entropy decoder 310 may parse the bitstream to derive information (ex. video/image information) necessary for image reconstruction (or picture reconstruction). The video/image information may further include information on various parameter sets such as an adaptation parameter set (APS), a picture parameter set (PPS), a sequence parameter set (SPS) or a video parameter set (VPS), etc. In addition, the video/image information may further include general constraint information. A decoding apparatus may decode a picture further based on information on the parameter set and/or the general constraint information. Signaled/received information and/or syntax elements described later herein may be decoded through the decoding procedure and obtained from the bitstream. For example, an entropy decoder 310 may decode information in a bitstream based on a coding method such as exponential Golomb encoding, CAVLC, CABAC, etc. and output a value of a syntax element necessary for image reconstruction and quantized values of a transform coefficient regarding a residual. In more detail, a CABAC entropy decoding method may receive a bin corresponding to each syntax element from a bitstream, determine a context model by using syntax element information to be decoded, decoding information of a neighboring block and a block to be decoded or information of a symbol/a bin decoded in a previous step, perform arithmetic decoding of a bin by predicting a probability of occurrence of a bin according to a determined context model and generate a symbol corresponding to a value of each syntax element. In this case, a CABAC entropy decoding method may update a context model by using information on a decoded symbol/bin for a context model of a next symbol/bin after determining a context model. Among information decoded in an entropy decoder 310, information on prediction is provided to a predictor (an inter predictor 332 and an intra predictor 331), and a residual value on which entropy decoding was performed in an entropy decoder 310, i.e., quantized transform coefficients and related parameter information may be input to a residual processor 320. A residual processor 320 may derive a residual signal (a residual block, residual samples, a residual sample array). In addition, information on filtering among information decoded in an entropy decoder 310 may be provided to a filter 350. Meanwhile, a reception unit (not shown) that receives a signal output from an encoding apparatus may be further configured as an internal/external element of a decoding apparatus 300 or a reception unit may be a component of an entropy decoder 310.

Meanwhile, a decoding apparatus according to this specification may be referred to as a video/image/picture decoding apparatus, and the decoding apparatus may be divided into an information decoder (a video/image/picture information decoder) and a sample decoder (a video/image/picture sample decoder). The information decoder may include the entropy decoder 310 and the sample decoder may include at least one of dequantizer 321, the inverse transformer 322, the adder 340, the filter 350, the memory 360, the inter predictor 332 and the intra predictor 331.

A dequantizer 321 may dequantize quantized transform coefficients and output transform coefficients. A dequantizer 321 may rearrange quantized transform coefficients into a two-dimensional block form. In this case, the rearrangement may be performed based on coefficient scan order performed in an encoding apparatus. A dequantizer 321 may perform dequantization on quantized transform coefficients by using a quantization parameter (e.g., quantization step size information) and obtain transform coefficients.

An inverse transformer 322 inversely transforms transform coefficients to obtain a residual signal (a residual block, a residual sample array).

A predictor 320 may perform prediction on a current block and generate a predicted block including prediction samples for the current block. A predictor 320 may determine whether intra prediction or inter prediction is applied to the current block based on the information on prediction output from an entropy decoder 310 and determine a specific intra/inter prediction mode.

A predictor 320 may generate a prediction signal based on various prediction methods described later. For example, a predictor 320 may not only apply intra prediction or inter prediction for prediction for one block, but also may apply intra prediction and inter prediction simultaneously. It may be referred to as a combined inter and intra prediction (CIIP) mode. In addition, a predictor may be based on an intra block copy (IBC) prediction mode or may be based on a palette mode for prediction for a block. The IBC prediction mode or palette mode may be used for content image/video coding of a game, etc. such as screen content coding (SCC), etc. IBC basically performs prediction within a current picture, but it may be performed similarly to inter prediction in that it derives a reference block within a current picture. In other words, IBC may use at least one of inter prediction techniques described herein. A palette mode may be considered as an example of intra coding or intra prediction. When a palette mode is applied, information on a palette table and a palette index may be included in the video/image information and signaled.

An intra predictor 331 may predict a current block by referring to samples within a current picture. The samples referred to may be positioned in the neighborhood of the current block or may be positioned a certain distance away from the current block according to a prediction mode. In intra prediction, prediction modes may include at least one nondirectional mode and a plurality of directional modes. An intra predictor 331 may determine a prediction mode applied to a current block by using a prediction mode applied to a neighboring block.

An inter predictor 332 may derive a prediction block for a current block based on a reference block (a reference sample array) specified by a motion vector on a reference picture. In this case, in order to reduce the amount of motion information transmitted in an inter prediction mode, motion information may be predicted in a unit of a block, a sub-block or a sample based on the correlation of motion information between a neighboring block and a current block. The motion information may include a motion vector and a reference picture index. The motion information may further include inter prediction direction information (L0 prediction, L1 prediction, Bi prediction, etc.). For inter prediction, a neighboring block may include a spatial neighboring block existing in a current picture and a temporal neighboring block existing in a reference picture. For example, an inter predictor 332 may configure a motion information candidate list based on neighboring blocks and derive a motion vector and/or a reference picture index of the current block based on received candidate selection information. Inter prediction may be performed based on various prediction modes, and the information on prediction may include information indicating an inter prediction mode for the current block.

An adder 340 may add an obtained residual signal to a prediction signal (a prediction block, a prediction sample array) output from a predictor (including an inter predictor 332 and/or an intra predictor 331) to generate a reconstructed signal (a reconstructed picture, a reconstructed block, a reconstructed sample array). When there is no residual for a block to be processed like when a skip mode is applied, a prediction block may be used as a reconstructed block.

An adder 340 may be referred to as a reconstructor or a reconstructed block generator. A generated reconstructed signal may be used for intra prediction of a next block to be processed in a current picture, may be output through filtering as described later or may be used for inter prediction of a next picture. Meanwhile, luma mapping with chroma scaling (LMCS) may be applied in a picture decoding process.

A filter 350 may improve subjective/objective image quality by applying filtering to a reconstructed signal. For example, a filter 350 may generate a modified reconstructed picture by applying various filtering methods to a reconstructed picture and transmit the modified reconstructed picture to a memory 360, specifically a DPB of a memory 360. The various filtering methods may include deblocking filtering, sample adaptive offset, adaptive loop filter, bilateral filter, etc.

The (modified) reconstructed picture stored in the DPB of the memory 360 can be used as a reference picture in the inter prediction unit 332. A memory 360 may store motion information of a block from which motion information in a current picture is derived (or decoded) and/or motion information of blocks in a pre-reconstructed picture. The stored motion information may be transmitted to an inter predictor 260 to be used as motion information of a spatial neighboring block or motion information of a temporal neighboring block. A memory 360 may store reconstructed samples of reconstructed blocks in a current picture and transmit them to an intra predictor 331.

Herein, embodiments described in a filter 260, an inter predictor 221 and an intra predictor 222 of an encoding apparatus 200 may be also applied equally or correspondingly to a filter 350, an inter predictor 332 and an intra predictor 331 of a decoding apparatus 300, respectively.

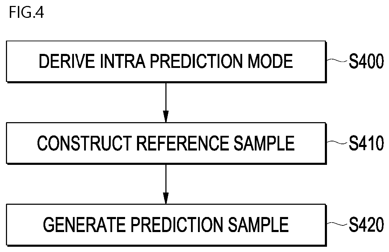

FIG. 4 illustrates an intra prediction method performed by the decoding device 300 according to an embodiment of the present disclosure.

Referring to FIG. 4, the decoding device may derive an intra prediction mode of a current block (S400). The intra prediction mode of the current block may be derived from a plurality of predefined intra prediction modes.

According to an embodiment of the present disclosure, the plurality of predefined intra prediction modes may include a horizontal planar mode and/or a vertical planar mode in addition to a conventional planar mode. In an embodiment, the horizontal planar mode and/or the vertical planar mode may be prediction modes that utilize only a part of the process of generating (or deriving) a prediction sample in the conventional planar mode. In the present disclosure, the horizontal planar mode may be referred to as a horizontal planar prediction mode, and the vertical planar mode may be referred to as a vertical planar prediction mode. The conventional planar mode is a planar mode used in general image compression technology, and in the present disclosure, the conventional planar mode may be referred to as a general planar mode or a normal planar mode.

As an example, the normal planar mode may generate a prediction sample using Equation 1 below.

[Equation 1]

$$predV(x,y) = \left((H - 1 - y) * rec(x, -1) + (y + 1) * rec(-1, H)\right) \ll log_2 W$$

$$predH(x,y)\left((W - 1 - x) * rec(-1, y) + (x + 1) * rec(W, -1)\right) \ll log_2 H$$

$$pred(x,y) == (predV(x,y) + predH(x,y) + W * H) \gg (log_2 W + log_2 H + 1)$$

Referring to Equation 1, the normal planar mode may construct the prediction mode to perform blending of a vertical planner prediction sample predV and a horizontal planner prediction sample predH. In the present disclosure, blending may also be referred to as combination, weighted sum, and weighted prediction.

According to an embodiment of the present disclosure, predV and predH of Equation 1 may be added as separate prediction modes. In other words, predV and predH of Equation 1 may be used for intra prediction as separate intra prediction modes.

As an embodiment, the vertical planar mode may be defined as Equation 2 below.

[Equation 2]

$$pred(x,y) = \left((H - 1 - y) * rec(x, -1) + (y + 1) * rec(-1, H)\right) \ll log_2 W$$

Referring to Equation 2, the vertical planar mode may generate a prediction sample using a vertical sample of a current sample in the current block and a lower-left sample thereof. The vertical sample represents a sample that is vertically adjacent to the current sample among reference samples of the current block, and the lower-left sample represents a sample that is adjacent to a lower-left corner of the current block among the reference samples of the current block. A weighted sum may be performed on the vertical sample and the lower-left sample based on a position (or vertical coordinate) of the current sample and a height of the current block. A shift operation may be performed on the weighted sum value by a value of the logarithm with a base of 2 of a width of the current block. In addition, the horizontal planar mode may be defined as Equation 3 below.

[Equation 3]

$$pred(x,y) = \left((W - 1 - x) * rec(-1, y) + (x + 1) * rec(W, -1)\right) \ll log_2 H$$

Referring to Equation 3, the horizontal planar mode may generate a prediction sample using the horizontal sample and the upper-right sample of the current sample in the current block. The horizontal sample represents a sample that is horizontally adjacent to the current sample among the reference samples of the current block, and the upper-right sample represents a sample that is adjacent to an upper-right corner of the current block among the reference samples of the current block. A weighted sum may be performed on the horizontal sample and the upper-right sample based on the position (or horizontal coordinate) of the current sample and the width of the current block. A shift operation may be performed on the weighted sum value by a value of the logarithm with a base of 2 of the height of the current block.

According to an embodiment of the present disclosure, the vertical planar mode and the horizontal planar mode may be signaled as one of the planar modes. As an embodiment, a syntax structure such as Table 1 below may be defined. The syntax (or syntax structure) defined in the present disclosure is described based on the VVC standard, which is a current video compression standard, but the invention is not limited thereto. The syntax may be modified within a substantially identical range in consideration of the substance of the invention.

[Table 1]

| coding_unit( x0, y0, cbWidth, cbHeight, cqtDepth, treeType, modeType ) { | Descriptor |
|---|---|
| ... | |
| if( sps_isp_enabled_flag && intra_luma_ref_idx = = 0 &&    (cbWidth <= MaxTbSizeY && cbHeight <= MaxTbSizeY) &&   ( cbWidth * cbHeight > MinTbSizeY * MinTbSizeY ) && !cu_act_enabled_flag ) | |
|     **intra_subpartitions_mode_flag** | ae(v) |
|    if( intra_subpartitions_mode_flag = = 1 ) | |
|     **intra_subpartitions_split_flag** | ae(v) |
|    if( intra_luma_ref_idx = = 0 ) | |
|     **intra_luma_mpm_flag**[ x0 ][ y0 ] | ae(v) |
|    if( intra_luma_mpm_flag[ x0 ][ y0 ] ) { | |
|     if( intra_luma_ref_idx = = 0 ) | |
|      **intra_luma_not_planar_flag**[ x0 ][ y0 ] | ae(v) |
|     if( intra_luma_not_planar_flag[ x0 ][ y0 ] ) | |
|      **intra_luma_ppm_idx[** x0 ][ y0 ] | ae(v) |
|     else { | |
|      if ( intra_subpartitions_mode_flag = = 0 ) | |
|      **planar_flag**[ x0 ][ y0 ] | ae(v) |
|      if ( planar_flag[ x0 ][ y0 ] = = 0 ) | |
|      **planar_dir_flag**[ x0 ][ y0 ] | ae(v) |
|     } | |
|    } else | |
|     **intra_luma_mpm_remainder**[ x0 ][ y0 ] | ae(v) |
| ... | |
| } | |

Referring to Table 1, intra_luma_mpm_flag is a syntax element indicating whether a most probalble mode (MPM) is applied to the current block. When the MPM is applied to the current block, whether the intra prediction mode of the current block is the planar mode may be indicated by intra luma_not_planar_flag.

According to an embodiment of the present disclosure, as shown in Table 1, when intra luma_not_planar_flag indicates that the planar mode is used, a syntax element planar_flag indicating whether the normal planar mode is used as the intra prediction mode may be signaled. When the planar flag indicates that the normal planar mode is not used, a syntax element planar_dir_flag indicating whether it is the horizontal planar mode or the vertical planar mode may be signaled.

As an embodiment, the method proposed in the present disclosure may be applied only when the current block is not in an intrasubpartitions (ISP) mode. In other words, a directional planar mode other than the normal planar mode may be used only when the ISP mode is not applied to the current block. That is, whether to obtain the planar flag may be determined based on whether the ISP is applied to the current block. When the planar_flag is not signaled, i.e., the planar flag is not present, planar_flag may be inferred as 1.

As an embodiment, mode information may be signaled independently of a normal planar mode transmission method. As an example, a syntax structure such as Table 2 below may be defined.

[Table 2]

| coding_unit( x0, y0, cbWidth, cbHeight, cqtDepth, treeType, modeType ) { | Descriptor |
|---|---|
| ... | |
| if( sps_isp_enabled_flag && intra_luma_ref_idx = = 0 &&<br>  (cbWidth <= MaxTbSizeY && cbHeight <= MaxTbSizeY) &&<br>  ( cbWidth * cbHeight > MinTbSizeY * MinTbSizeY ) &&<br>  !cu_act_enabled_flag ) | |
|    **intra_subpartitions_mode_flag** | ae(v) |
|   if( intra_subpartitions_mode_flag = = 1 ) | |
|    **intra_subpartitions_split_flag** | ae(v) |
|   else{ | |
|    **planar_horver_flag**[ x0 ][ y0 ] | ae(v) |
|    if ( planar_horver_flag ) | |
|     **planar_dir_flag**[ x0 ][ y0 ] | ae(v) |
|    } | |
|   if ( planar_horver_flag = = 0 ){ | |
|   if( intra_luma_ref_idx == 0 ) | |
|    **intra_luma_mpm_flag**[ x0 ][ y0 ] | ae(v) |
|   if( intra_luma_mpm_flag[ x0 ][ y0 ] ) { | |
|    if( intra_luma_ref_idx = = 0 ) | |
|    **intra_luma_not_planar_flag**[ x0 ][ y0 ] | ae(v) |
|    if( intra_lumanot_planar_flag[ x0 ][ y0 ] ) | |
|    **intra_luma_mpm_idx**[ x0 ][ y0 ] | ae(v) |
|   } else | |
|    **intra_luma_mpm_remainder**[ x0 ][ y0 ] | ae(v) |
|   } | |
| ... | |
| } | |

Referring to Table 2, a syntax element planar_horver_flag indicating whether a directional planar mode is applied to the current block may be signaled prior to an MPM-based intra prediction mode derivation process. Specifically, when the planar_horver_flag value is 1, it may indicate that the intra prediction mode of the current block (i.e., the current coding unit, the current coding block) is the horizontal planar mode or the vertical planar mode. When the planar_horver_flag value is 0, it may indicate that the intra prediction mode of the current block is neither the horizontal planar mode nor the vertical planar mode. When the planar_horver_flag is not present, its value may be inferred as 0.

When the planar_horver_flag value is 1, the syntax element planar_dir_flag indicating the horizontal or vertical planar mode may be signaled. As an example, when the planar_dir_flag value is 1, it may indicate that the intra prediction mode of the current block is the horizontal planar mode, and when the planar_dir_flag value is 0, it may indicate that the intra prediction mode of the current block is the vertical planar mode.

In addition, a horizontal/vertical planar mode flag planar_horver_flag and a direction indication flag planar_dir_flag may precede an ISP mode flag. As an example, a syntax structure such as Table 3 below may be defined.

[Table 3]

| coding_unit( x0, y0, cbWidth, cbHeight, cqtDepth, treeType, modeType ) { | Descriptor |
|---|---|
| ... | |
| **planar_horver_flag**[ x0 ][ y0 ] | ae(v) |
| if ( planar_horver_flag[ x0 ][ y0 ] ) | |
| **planar_dir_flag**[ x0 ][ y0 ] | ae(v) |
| else { | |
| if( sps_isp_enabled_flag && intra_luma_ref_idx = = 0 && (cbWidth <= MaxTbSizeY && cbHeight <= MaxTbSizeY) && ( cbWidth * cbHeight > MinTbSizeY * MinTbSizeY ) && !cu_act_enabled_flag ) | |
| **intra_subpartitions_mode_flag** | ae(v) |
| if( intra_subpartitions_mode_flag = = 1 ) | |
| **intra_subpartitions_split_flag** | ae(v) |
| if( intra_luma_ref_idx = = 0 ) | |
| **intra_luma_mpm_flag**[ x0 ][ y0 ] | ae(v) |
| if( intra_luma_mpm_flag[ x0 ][ y0 ] ) { | |
| if( intra_luma_ref_idx = = 0 ) | |
| **intra_luma_not_planar_flag**[ x0 ][ y0 ] | ae(v) |
| if( intra_luma_not_planar_flag[ x0 ][ y0 ] ) | |
| **_luma_mpm_idx**[ x0 ][ y0 ] | ae(v) |
| } else | |
| **intra_luma_mpm_remainder**[ x0 ][ y0 ] | ae(v) |
| } | |
| ... | |
| } | |

Referring to Table 3, whether the ISP mode is parsed or not may be determined depending on whether the directional planar mode is applied. In Table 3, the contents described above with reference to Tables 1 and 2 may be applied in the same manner. Redundant descriptions related thereto are omitted.

In addition, the horizontal/vertical planar mode flag planar_horver_flag and the direction indication flag planar_dir_flag may precede a multi reference line (MRL) mode flag. As an example, a syntax structure as in Table 4 below may be defined.

[Table 4]

| coding_unit( x0, y0, cbWidth, cbHeight, cqtDepth, treeType, modeType ) { | Descriptor |
|---|---|
| ... | |
| if( sps_mip_enabled_flag ) | |
| **intra_mip_flag** | ae(v) |
| if( intra_mip_flag ) { | |
| **intra_mip_transposed_flag**[ x0 ][ y0 ] | ae(v) |
| **intra_mip_mode**[ x0 ][ y0 ] | ae(v) |
| } else { | |
| **planar_horver_flag**[ x0 ][ y0 ] | ae(v) |

(continued)

| | |
|---|---|
| if ( planar_horver_flag[ x0 ][ y0 ] ) | |
| **planar_dir_flag**[ x0 ][ y0 ] | ae(v) |
| else { | |
| if( sps_mrl_enabled_flag && (( y0 % CtbSizeY ) > 0) ) | |
| **intra_luma_ref_idx** | ae(v) |
| if( sps_isp_enabled_flag && intra_luma_ref_idx = = 0 && (cbWidth <= MaxTbSizeY && cbHeight <= MaxTbSizeY) && ( cbWidth * cbHeight > MinTbSizeY * MinTbSizeY ) && !cu_act_enabled_flag ) | |
| **intra_subpartitions_mode_flag** | ae(v) |
| if( intra_subpartitions_mode_flag = = 1 ) | |
| **intra_subpartitions_split_flag** | ae(v) |
| if( intra_luma_ref_idx = = 0 ) | |
| **intra_luma_mpm_flag**[ x0 ][ y0 ] | ae(v) |
| if( intra luma mpm flag[ x0 ][ y0 ] ) { | |
| if( intra_luma_ref_idx = = 0 ) | |
| **intra_luma_not_planar_flag**[ x0 ][ y0 ] | ae(v) |
| if( intra_luma_not_planar_flag[ x0 ][ y0 ] ) | |
| **intra_luma_mpm_idx**[ x0 ][ y0 ] | ae(v) |
| } else | |
| **intra_luma_mpm_remainder**[ x0 ][ y0 ] | ae(v) |
| } | |
| ... | |
| } | |

In Table 4, the contents described above with reference to Tables 1 and 2 may be applied in the same manner. Redundant descriptions related thereto are omitted.

In addition, the horizontal/vertical planar mode flag planar_horver_flag and the direction indication flag planar_dir_flag may precede a matrix-based intra prediction (MIP) mode flag. As an example, a syntax structure such as Table 5 may be defined.

[Table 5]

| coding_unit( x0, y0, cbWidth, cbHeight, cqtDepth, treeType, modeType ) { | Descriptor |
|---|---|
| ... | |
| **planar_horver_flag**[ x0 ][ y0 ] | ae(v) |
| if ( planar_horver_flag[ x0 ][ y0 ] ) | |
| **planar_dir_flag**[ x0 ][ y0 ] | ae(v) |
| else { | |
| if( sps_mip_enabled_flag ) | |
| **intra_mip_flag** | ae(v) |
| if( intra_mip_flag ) { | |
| **intra_mip_transposed_flag**[ x0 ][ y0 ] | ae(v) |
| **intra_mip_mode**[ x0 ][ y0 ] | ae(v) |

# EP 4 564 810 A1

(continued)

| | |
|---|---|
| } else { | |
| if( sps_mrl_enabled_flag && (( y0 % CtbSizeY ) > 0) ) | |
| **intra_luma_ref_idx** | ae(v) |
| if( sps_isp_enabled_flag && intra_luma_ref_idx = = 0 && (cbWidth <= MaxTbSizeY && cbHeight <= MaxTbSizeY) && ( cbWidth * cbHeight > MinTbSizeY * MinTbSizeY ) && !cu_act_enabled_flag ) | |
| **intra_subpartitions_mode_flag** | ae(v) |
| if( intra_subpartitions_mode_flag = = 1 ) | |
| **intra_subpartitions_split_flag** | ae(v) |
| if( intra_luma_ref_idx = = 0 ) | |
| **intra_luma_mpm_flag**[ x0 ][ y0 ] | ae(v) |
| if( intra luma_mpm flag[ x0 ][ y0 ] ) { | |
| if( intra_luma_ref_idx = = 0 ) | |
| **intra_luma_not_planar_flag**[ x0 ][ y0 ] | ae(v) |
| if( intra_luma_not_planar_flag[ x0 ][ y0 ] ) | |
| **intra_luma_mpm_idx**[ x0 ][ y0 ] | ae(v) |
| } else | |
| **intra_luma_mpm_remainder**[ x0 ][ y0 ] | ae(v) |
| } | |
| } | |
| ... | |
| } | |

In Table 5, the contents described above with reference to Tables 1 and 2 may be applied in the same manner. Redundant descriptions related thereto are omitted.

In addition, when the planar mode is applied, the flag may be parsed without considering whether the ISP is applied. A syntax structure such as Table 6 below may be defined.

[Table 6]

| | Descriptor |
|---|---|
| coding_unit( x0, y0, cbWidth, cbHeight, cqtDepth, treeType, modeType ) { | |
| ... | |
| if( sps_isp_enabled_flag && intra_luma_ref_idx = = 0 &&          (cbWidth <= MaxTbSizeY && cbHeight <= MaxTbSizeY) &&          ( cbWidth * cbHeight > MinTbSizeY * MinTbSizeY ) &&        !cu_act_enabled_flag ) | |
| **intra_subpartitions_mode_flag** | ae(v) |
| if( intra_subpartitions_mode_flag = = 1 ) | |
| **intra_subpartitions_split_flag** | ae(v) |
| if( intra_luma_ref_idx = = 0 ) | |
| **intra_luma_mpm_flag**[ x0 ][ y0 ] | ae(v) |
| if( intra_luma_mpm_flag[ x0 ][ y0 ] ) { | |
| if( intra_luma_ref_idx = = 0 ) | |
| **intra_luma_not_planar_flag**[ x0 ][ y0 ] | ae(v) |

(continued)

| | Descriptor |
|---|---|
| if( intra_luma_not_planar_flag[ x0 ][ y0 ] ) | |
| **intra_luma_mpm_idx**[ x0 ][ y0 ] | ae(v) |
| else { | |
| **planar_flag**[ x0 ][ y0 ] | ae(v) |
| if ( planar_flag[ x0 ][ y0 ] = = 0 ) | |
| **planar_dir_flag**[ x0 ][ y0 ] | ae(v) |
| } | |
| } else | |
| **intra_luma_mpm_remainder**[ x0 ][ y0 ] | ae(v) |
| ... | |
| } | |

In Table 6, the contents described above with reference to Tables 1 and 2 may be applied in the same manner. Redundant descriptions related thereto are omitted.

Alternatively, the proposed mode information may be signaled independently of the planar mode signaling method. A syntax structure such as Table 7 below may be defined.

[Table 7]

| coding_unit( x0, y0, cbWidth, cbHeight, cqtDepth, treeType, modeType ) { | Descriptor |
|---|---|
| ... | |
| if( sps_isp_enabled_flag && intra_luma_ref_idx = = 0 && (cbWidth <= MaxTbSizeY && cbHeight <= MaxTbSizeY) && ( cbWidth * cbHeight > MinTbSizeY * MinTbSizeY ) && !cu_act_enabled_flag ) | |
| **intra_subpartitions_mode_flag** | ae(v) |
| if( intra_subpartitions_mode_flag = = 1 ) | |
| **intra_subpartitions_split_flag** | ae(v) |
| **planar_horver_flag**[ x0 ][ y0 ] | ae(v) |
| if ( planar_horver_flag ) | |
| **planar_dir_flag**[ x0 ][ y0 ] | ae(v) |
| if ( planar_horver_flag = = 0 ){ | |
| if( intra_luma_ref_idx = = 0 ) | |
| **intra_luma_mpm_flag**[ x0 ][ y0 ] | ae(v) |
| if( intra_luma_mpm_flag[ x0 ][ y0 ] ) { | |
| if( intra_luma_ref_idx = = 0 ) | |
| **intra_luma_not_planar_flag**[ x0 ][ y0 ] | ae(v) |
| if( intra_luma_not_planar_flag[ x0 ][ y0 ] ) | |
| **intra_luma_mpm_idx**[ x0 ][ y0 ] | ae(v) |
| } else | |
| **intra_luma_mpm_remainder**[ x0 ][ y0 ] | ae(v) |
| } | |
| ... | |
| } | |

In Table 7, the contents described above with reference to Tables 1 and 2 may be applied in the same manner. Redundant descriptions related thereto are omitted.

In addition, the horizontal/vertical planar mode flag planar_horver_flag and the direction indication flag planar_dir_flag may precede the MRL mode flag. As an example, a syntax structure such as Table 8 below may be defined.

[Table 8]

| coding_unit( x0, y0, cbWidth, cbHeight, cqtDepth, treeType, modeType ) { | Descriptor |
|---|---|
| ... | |
| **planar_horver_flag**[ x0 ][ y0 ] | ae(v) |
| if ( planar_horver_flag[ x0 ][ y0 ] ) | |
| **planar_dir_flag**[ x0 ][ y0 ] | ae(v) |
| if( sps_isp_enabled_flag && intra_luma_ref_idx = = 0 &&     (cbWidth <= MaxTbSizeY && cbHeight <= MaxTbSizeY) &&     ( cbWidth * cbHeight > MinTbSizeY * MinTbSizeY ) && !cu_act_enabled_flag ) | |
| **intra_subpartitions_mode_flag** | ae(v) |
| if( intra_subpartitions_mode_flag = = 1) | |
| **intra_subpartitions_split_flag** | ae(v) |
| if( planar_horver_flag[ x0 ][ y0 ] == 0 ) { | |
| if( intra_luma_ref_idx = = 0 ) | |
| **intra_luma_mpm_flag**[ x0 ][ y0 ] | ae(v) |
| if( intra_luma_mpm_flag[ x0 ][ y0 ] ) { | |
| if( intra_luma_ref_idx = = 0 ) | |
| **intra_luma_not_planar_flag**[ x0 ][ y0 ] | ae(v) |
| if( intra_luma_not_planar_flag[ x0 ][ y0 ] ) | |
| **intra_luma_mpm_idx**[ x0 ][ y0 ] | ae(v) |
| } else | |
| **intra_luma_mpm_remainder**[ x0 ][ y0 ] | ae(v) |
| } | |
| ... | |
| } | |

In Table 8, the contents described above with reference to Tables 1 and 2 may be applied in the same manner. Redundant descriptions related thereto are omitted.

In addition, the horizontal/vertical planar mode flag planar _horver_flag and the direction indication flag planar_dir_flag may precede the MIP mode flag. As an example, a syntax structure such as Table 9 below may be defined.

[Table 9]

| coding_unit( x0, y0, cbWidth, cbHeight, cqtDepth, treeType, modeType ) { | Descriptor |
|---|---|
| ... | |
| if( sps_mip_enabled_flag ) | |
| **intra_mip_flag** | ae(v) |
| if( intra_mip _flag ) { | |
| **intra_mip_transposed_flag**[ x0 ][ y0 ] | ae(v) |
| **intra_mip_mode[** x0 ][ y0 ] | ae(v) |
| } else { | |

(continued)

| | |
|---|---|
| **planar_horver_flag**[ x0 ][ y0 ] | ae(v) |
| if ( planar_horver_flag[ x0 ][ y0 ] ) | |
| **planar_dir_flag**[ x0 ][ y0 ] | ae(v) |
| else { | |
| if( sps_mrl_enabled_flag && (( y0 % CtbSizeY ) > 0) ) | |
| **intra_luma_ref_idx** | ae(v) |
| } | |
| if( sps_isp_enabled_flag && intra_luma_ref_idx = = 0 &&    (cbWidth <= MaxTbSizeY && cbHeight <= MaxTbSizeY) &&    ( cbWidth * cbHeight > MinTbSizeY * MinTbSizeY ) &&    !cu_act_enabled_flag ) | |
| **intra_subpartitions_mode_flag** | ae(v) |
| if( intra_subpartitions_mode_flag = = 1) | |
| **intra_subpartitions_split_flag** | ae(v) |
| if( planar_horver_flag[ x0 ][ y0 ] == 0 ) { | |
| if( intra_luma_ref_idx = = 0 ) | |
| **intra_luma_mpm_flag**[ x0 ][ y0 ] | ae(v) |
| if( intra luma_mpm flag[ x0 ][ y0 ] ) { | |
| if( intra_luma_ref_idx = = 0 ) | |
| **intra_luma_not_planar_flag[** x0 ][ y0 ] | ae(v) |
| if( intra_luma_not_planar_flag[ x0 ][ y0 ] ) | |
| **intra_luma_mpm_idx**[ x0 ][ y0 ] | ae(v) |
| } else | |
| **intra_luma_mpm_remainder**[ x0 ][ y0 ] | ae(v) |
| } | |
| ... | |
| } | |

In Table 9, the contents described above with reference to Tables 1 and 2 may be applied in the same manner. Redundant descriptions related thereto are omitted.

In addition, the horizontal/vertical planar mode flag planar _horver_flag may be subjected to context model coding. In addition, the direction indication flag planar_dir flag may be subjected to context model coding. Alternatively, the horizontal/vertical planar mode flag may be subjected to context model coding, and the direction indication flag may be subjected to bypass coding.

In the examples of the syntax described above, an upper level switch (i.e., on/off) is not separately described in order to express the relationship with other intra prediction modes, but the prediction mode proposed in the embodiment of the present disclosure may be signaled whether the prediction mode is activated in an upper level syntax such as a video parameter set (VPS), a sequence parameter set (SPS), a picture parameter set (PPS), a picture header, a slice header, and the like. For example, in the SPS, whether the direction indication flag is applied may be signaled first, and then, in a lower level syntax (e.g., coding unit syntax), whether the prediction mode is activated at the upper level may be checked first and then whether or not to parse the flag may be determined.

In the embodiment described above, an example was given for a case where the intra prediction method is applied to the luminance component, but this prediction method may be applied to the chrominance component in the same manner. For example, when coding the chrominance component, the same prediction mode may be selected and coded through a direct mode (DM) when the prediction mode of the corresponding luminance component is the horizontal planar mode or the vertical planar mode. Alternatively, additional information may be signaled regarding which planar mode among the normal planar mode, the vertical planar mode, and the horizontal planar mode is applied to the chrominance component.

In addition, the present embodiment proposes a signaling method for the plurality of planar modes described above. As an embodiment, a planar mode used for the current block among the plurality of planar modes may be specified based on a mode derived by decoder-side intra mode derivation (DIMD).

The DIMD is a method of calculating a histogram of gradients (HoG) based on the reconstructed neighboring samples, and then utilizing N prediction modes with high histogram amplitudes for the prediction of the current block. When the DIMD is applied, a gradient may be calculated based on at least two samples belonging to a neighboring area of the current block. Here, the gradient may include at least one of a gradient in the horizontal direction or a gradient in the vertical direction. Based on at least one of the calculated gradient or the magnitude of the gradient, the intra prediction mode of the current block may be derived. Here, the magnitude of the gradient may be determined based on the sum of the gradient in the horizontal direction and the gradient in the vertical direction. Through this derivation method, one intra prediction mode may be derived or two or more intra prediction modes may be derived for the current block.

As an embodiment, when a gradient-based derivation method is applied, one or more intra prediction modes may be derived from reconstructed neighboring samples. In this case, one or more prediction modes may be derived based on the gradients derived from the reconstructed neighboring samples according to the embodiment of the present disclosure. For example, one or more intra prediction modes may be derived from the reconstructed neighboring samples. As an example, the maximum number of intra prediction modes derived through the gradient-based derivation method may be predefined in the encoder/decoder. As an example, the maximum number of intra prediction modes derived through the gradient-based derivation method may be N. For example, N may be defined as 2, 3, 4, 5, 6, or 7.

As an example, a predictor obtained by the derived intra prediction mode (which may be referred to as a prediction sample or a prediction block) may be combined with a predictor obtained by the planar mode (which may be abbreviated as the planar mode predictor). For example, a predictor obtained by the derived intra prediction mode may be weighted-summed with the planar mode predictor. In this case, as an example, the weights used in the weighted sum may be determined based on the gradients calculated from the neighboring samples reconstructed according to the embodiment of the present disclosure.

In addition, as an example, when the number of intra prediction modes derived through the gradient-based derivation method is two or more, the predictor obtained by the derived intra prediction mode may be combined with the planar mode predictor. As an example, when the number of intra prediction modes derived through the gradient-based derivation method is one, the predictor obtained by the one derived intra prediction mode may be output as a prediction sample or prediction block by the gradient-based derivation method without being combined (or weighted-summed) with the planar mode predictor.

In addition, as an example, the gradient may be calculated in units of a window having a predetermined size. Based on the calculated gradient, an angle indicating the directionality of the sample within the corresponding window may be calculated. The calculated angle may correspond to any one of a plurality of predefined intra prediction modes described above. The magnitude of the gradient may be stored/updated for the intra prediction mode corresponding to the calculated angle. In the present disclosure, the magnitude of the gradient may be referred to as the amplitude of gradient, the histogram amplitude, the histogram size, etc. Through this process, an intra prediction mode corresponding to the calculated gradient may be determined for each window. The magnitude of the gradient may be stored/updated for the determined intra prediction mode. The top T intra prediction modes having the largest magnitude among the stored magnitudes of the gradient are selected, and the selected intra prediction mode may be set as the intra prediction mode of the current block. Here, T may be an integer of 1, 2, 3, or more.

As an example, the neighboring areas of the current block may be the left, upper left, and upper areas of the current block. For example, the gradient in the horizontal direction or the gradient in the vertical direction may be derived from rows and columns of the second neighboring sample. The rows and/or columns of the second neighboring sample may represent the rows and/or columns located next to the row and column of the neighboring sample immediately adjacent to the current block. As an example, a HoG may be derived from the gradient in the horizontal direction and the gradient in the vertical direction. The gradient or histogram of the gradient may be derived by applying a window using L-shaped rows and columns of 3 pixels (or pixel lines) around the current block. In this case, the window may be defined to have a size of 3x3. However, as an example, the present disclosure is not limited thereto, and the window may be defined to have a size of 2x2, 4x4, 5x5, etc. In addition, as an example, the window may be a Sobel filter.

As an example, two or more intra prediction modes having the largest gradient magnitude (or amplitude) may be selected. A final predicted block may be generated by blending (or combining, weightedsumming) predicted blocks predicted using the selected intra prediction modes and predicted blocks predicted using the planar mode. In this case, the weight applied to each predicted block may be derived based on the histogram amplitude.

In an embodiment of the present disclosure, when the planar mode used for the current block is not the normal planar mode, in order to determine which of the horizontal/vertical planar modes is the prediction mode of the current block, a prediction mode with the highest HoG amplitude obtained in the DIMD process (hereinafter referred to as a DIMD mode) may be used. That is, in the embodiment described above, the planar_flag is signaled, but the planar mode used for the current block among the horizontal/vertical planar modes maybe determined based on the DIMD prediction mode without signaling the planar_dir_flag.

As an example, when the DIMD mode (i.e., the mode with the highest HoG amplitude) is a horizontal directional mode, the intra prediction mode of the current block may be derived as the horizontal planar mode. When the DIMD mode is a vertical directional mode, the intra prediction mode of the current block may be derived as the vertical planar mode. The DIMD mode may be determined as the horizontal directional mode when it is smaller than a diagonal mode (mode 34 in the VVC standard). The DIMD mode may be determined as the vertical directional mode when it is greater than or equal to the diagonal mode.

Alternatively, as an example, when the current block is in the planar mode, the prediction mode with the highest HoG amplitude obtained in the DIMD process may be used to determine which mode among the normal planar mode, the vertical planar mode, and the horizontal planar mode is the prediction mode of the current block.

That is, in the embodiment described above, the prediction mode of the current block may be determined as one of the planar mode used for the current block among the normal planar mode, the vertical planar mode, and the horizontal planar mode based on the mode derived by the DIMD without signaling the planar flag and planar_dir_flag.

For example, when the DIMD mode is a mode within a certain range from the horizontal mode, the planar mode used for the current block may be determined as the horizontal planar mode. When the DIMD mode is a mode within a certain range from the vertical mode, the planar mode used for the current block may be determined as the vertical planar mode. In other cases, the planar mode used for the current block may be determined as the normal planar mode.

Specifically, when the DIMD mode is ±M mode from the horizontal mode, the current prediction mode may be derived as the horizontal planar mode. For example, when M is 5 and the DIMD mode is 16, since $13 \leq$ DIMD mode $\leq 23$, the intra prediction mode of the current block may be derived as the horizontal planar mode.

Similarly, when the DIMD mode is ±M mode from the vertical mode, the current prediction mode may be derived as the vertical planar mode. In other cases, the current prediction mode may be derived as the normal planar mode. In this case, M may be an integer from 0 to 16 or less if there are 65 intra prediction directions. Alternatively, when there are K intra prediction directions, M may be an integer ranging from 0 to K/4.

The decoding device may construct a reference sample of the current block (S410). The decoding device may generate a prediction sample of the current block based on the determined intra prediction mode of the current block and the constructed reference sample thereof (S420).

Hereinafter, a method of selecting a prediction mode based on prediction accuracy in a predefined template region is described.

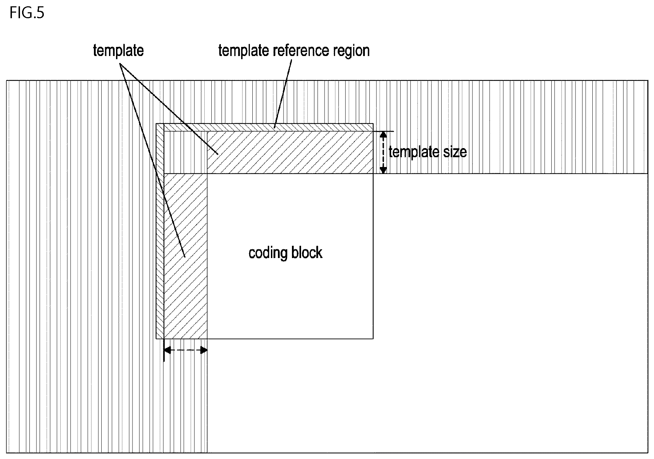

FIG. 5 is a diagram for describing a template matching-based prediction mode determination method according to an embodiment of the present disclosure.

According to the embodiment of the present disclosure, a planar mode applied to a current block among a plurality of planar modes may be determined using template matching. The planar mode used for the current block among the normal planar mode, the vertical planar mode, and the horizontal planar mode may be determined using template matching, and the planar mode used for a current block among the vertical planar mode and the horizontal planar mode may be determined using template matching.

In the latter case, when the planar mode is used for the current block, a flag (planar flag of FIG. 4 above) indicating whether it is a normal planar mode or a directional planar mode may be signaled. When the normal planar mode is not applied, that is, when the directional planar mode is applied, the planar mode used for the current block among the vertical planar mode and the horizontal planar mode may be determined using a cost calculated by utilizing a template region.

As an embodiment, a prediction sample (or a prediction block) for the template region illustrated in FIG. 5 may be generated using the vertical/horizontal planar mode. In this case, a template reference area may be used. The cost may be calculated based on the difference between the generated prediction sample and the reconstructed sample. In this case, sum of absolute difference (SAD), sum of absolute transformed difference (SATD), and the like may be used for cost calculation. For example, prediction may be performed in the template region illustrated in FIG. 5 using the horizontal or vertical planar mode, and the mode with the minimum cost among the two modes may be selected as the prediction mode for the current block.

As another example, as a template-based mode selection method, the planar_dir_flag described in the embodiment of FIG. 4 is signaled, but an order of vertical/horizontal planar mode candidates is sorted in an order of cost through template-based SAD and SATD, and the intra prediction mode of the current block may be determined based on a list of the sorted candidates.

In this case, a direction indication flag indicating the vertical/horizontal planar mode may be subjected to context coding. In this case, the accuracy of the direction indication flag is increased, and thus coding performance may be expected to be improved. In addition, as an embodiment, the template region may be selectively utilized depending on the vertical/horizontal planar mode. As in the equation described above with reference to FIG. 4, the vertical planar mode mainly uses the upper reference sample, and the horizontal planar mode mainly uses the left reference sample.

Therefore, in the case of the horizontal planar mode, deriving the prediction sample from the left template region may result in more accurate prediction. Similarly, in the case of the horizontal planar mode, deriving the prediction sample from the upper reference sample may result in more accurate prediction. In the case of the horizontal planar mode, the prediction sample may be generated from the left template region, and in the case of the vertical planar mode, the prediction sample may be generated from the upper template region.

In addition, as an embodiment, when sizes of the left template and the upper template are different, the prediction mode may be determined by comparing derived results by normalizing the cost by the number of pixels in each template region.

In the former case, only information indicating whether the current block is in the planar mode is signaled, but the planar mode used for the current block among the normal planar mode, the vertical planar mode, and the horizontal planar mode may be determined using the cost calculated by utilizing the template region.

As an embodiment, a prediction sample (or a prediction block) for the template region shown in FIG. 5 may be generated using the normal/vertical/horizontal planar mode. The cost may be calculated based on the difference between the generated prediction sample and the reconstructed sample. In this case, the SAD, the SATD, and the like may be used for cost calculation. For example, prediction may be performed in the template region shown in FIG. 5 in the normal, horizontal, or vertical planar mode, and the mode with the minimum cost among the three modes may be selected as the intra prediction mode of the current block.

As another embodiment, as the template-based mode selection method, the order of normal/vertical/horizontal planar mode candidates may be sorted in an order of lowest cost through template-based SAD and SATD, and the intra prediction mode of the current block may be determined based on the list of the sorted candidates. Information indicating a candidate used for the current block within the list of sorted candidates may be signaled.

In addition, as an embodiment, the template region may be selectively utilized according to the vertical/horizontal planar mode. As in the equation described above with reference to FIG. 4, the vertical planar mode mainly uses the upper reference sample, and the horizontal planar mode mainly uses the left reference sample

Therefore, in the case of the horizontal planar mode, deriving the prediction sample from the left template region may result in more accurate prediction. Similarly, in the case of the horizontal planar mode, deriving the prediction sample from the upper reference sample may result in more accurate prediction. In the case of the horizontal planar mode, the prediction sample may be generated from the left template region, and in the case of the vertical planar mode, the prediction sample may be generated from the upper template region.

In addition, as an embodiment, when sizes of the left template and the upper template are different, the prediction mode may be determined by comparing derived results by normalizing the cost by the number of pixels in each template region.

In addition, according to an embodiment of the present disclosure, position dependent intra prediction (PDPC) may be applied to the prediction block generated according to the prediction mode proposed in the embodiment described above. In the present disclosure, the PDPC may be referred to as position-based intra prediction sample filtering. The PDPC is a filter for alleviating the discontinuity between the prediction block and the neighboring reconstructed samples.

Similar to other conventional prediction blocks, the PDPC may also be applied to the prediction block constructed in the method described above with reference to FIG. 4 and FIG. 5. As an embodiment, since the vertical/horizontal planar mode has performance similar to that of the normal planar mode, the PDPC method applied to the conventional planar prediction block may be applied to the vertical/horizontal planar mode.

Alternatively, since, in the horizontal planar mode, predictions are made by utilizing a relatively large number of left reference samples, while the upper reference samples are not utilized except for the upper-right reference sample, the PDPC method for the horizontal prediction mode with similar characteristics may be applied by taking this into account. Similarly, since, in the vertical planar mode, predictions are made by utilizing a relatively large number of the upper reference samples, while the left reference samples are not utilized except for the lower-left reference samples, the PDPC method for the vertical prediction mode with similar characteristics may be applied by taking this into account.

Meanwhile, the PDPC is an additional process for the prediction block and is applied in units of pixels, and thus it may affect the complexity of a codec. Taking this into account, the PDPC application conditions for horizontal/vertical planar prediction blocks may be defined. For example, for the horizontal/vertical planar mode, whether to apply the PDPC thereto may be determined depending on the size of the block and a ratio of width and height thereof. Alternatively, for the horizontal/vertical planar mode, whether to apply the PDPC thereto may be determined depending on the prediction mode of the neighboring block. Alternatively, the PDPC may not be applied to the horizontal/vertical planar mode.

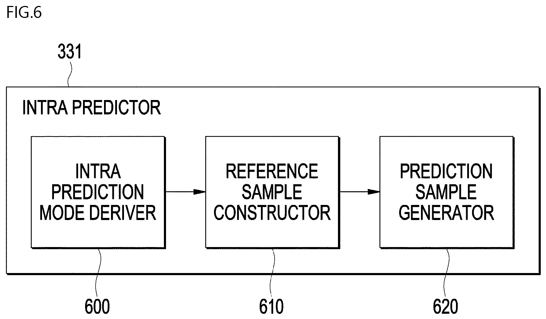

FIG. 6 illustrates a schematic configuration of an intra prediction unit 331 that performs an intra prediction method according to the present disclosure.

Referring to FIG. 6, the intra prediction unit 331 may include an intra prediction mode deriver 600, a reference sample constructor 610, and a prediction sample generator 620.

The intra prediction mode deriver 600 may derive an intra prediction mode of a current block. The intra prediction mode of the current block may be derived from a plurality of predefined intra prediction modes.

As described above, the predefined plurality of intra prediction modes may include the horizontal planar mode and/or the vertical planar mode in addition to the conventional planar mode. In an embodiment, the horizontal planar mode and/or vertical planar mode may be the prediction modes that utilize only a part of a process of generating (or deriving) prediction samples in the conventional planar mode.

As described above, when the horizontal planar mode is applied, the prediction sample of the current sample may be generated using the horizontal sample and the upper-right sample of the current sample within the current block. When the vertical planar mode is applied, the prediction sample of the current sample may be generated using the vertical sample and the lower-left sample of the current sample within the current block.

In addition, as described above with reference to Tables 1 to 9, a syntax element indicating whether the planar mode is used for the current block, a syntax indicating a planar mode applied to the current block among the plurality of planar modes, and the like may be signaled.

In addition, as described above, the mode proposed in the present disclosure may be determined based on whether the ISP is applied to the current block. As an example, the directional planar mode proposed in the present disclosure may be used for intra prediction of the current block only when the ISP is not applied.

In addition, as described above, the planar mode used for the current block among the plurality of planar modes may be specified based on the mode derived by the DIMD.

In addition, as described above with reference to FIG. 5, the planar mode applied to the current block among the plurality of the planar modes may be determined using template matching. The planar mode used for the current block among the normal planar mode, the vertical planar mode, and the horizontal planar mode may be determined using template matching, and the planar mode used for the current block among the vertical planar mode and the horizontal planar mode may be determined using template matching.

The reference sample constructor 610 may construct a reference sample of the current block. The prediction sample generator 620 may generate a prediction sample of the current block based on the determined intra prediction mode of the current block and the constructed reference sample thereof.

In addition, as described above, position-based intra prediction sample filtering may be applied to the prediction block generated according to the planar mode proposed in the present disclosure.

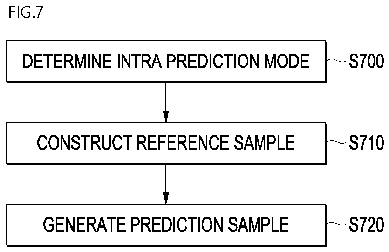

FIG. 7 illustrates an intra prediction method performed by the encoding device 200 according to an embodiment of the present disclosure.

In an embodiment of the present disclosure, a planar mode-based intra prediction method performed by the encoding device is described. The embodiments described above with reference to FIGS. 4 to 6 may be applied in substantially the same manner, and redundant descriptions are omitted here.

Referring to FIG. 7, the encoding device may determine an intra prediction mode of the current block (S700). The intra prediction mode of the current block may be determined from a plurality of predefined intra prediction modes.

As described above, the predefined plurality of intra prediction modes may include the horizontal planar mode and/or vertical planar mode in addition to the conventional planar mode. In an embodiment, the horizontal planar mode and/or vertical planar mode may be prediction modes that utilize only a part of the process of generating (or deriving) prediction samples in the conventional planar mode.

As described above, when the horizontal planar mode is applied, the prediction sample of the current sample may be generated using the horizontal sample and the upper-right sample of the current sample in the current block. When the vertical planar mode is applied, the prediction sample of the current sample may be generated using the vertical sample and the lower-left sample of the current sample in the current block.

In addition, as described above with reference to Tables 1 to 9, a syntax element indicating whether the planar mode is used for the current block, a syntax indicating a planar mode applied to the current block among the plurality of planar modes, and the like may be signaled.

In addition, as described above, the mode proposed in the present disclosure may be determined based on whether the ISP is applied to the current block. As an example, the directional planar mode proposed in the present disclosure may be used for intra prediction of the current block only when the ISP is not applied.

In addition, as described above, the planar mode used for the current block among the plurality of planar modes may be specified based on the mode derived by the DIMD.

In addition, as described above with reference to FIG. 5, the planar mode applied to the current block among the plurality of planar modes may be determined using template matching. The planar mode used for the current block among the normal planar mode, the vertical planar mode, and the horizontal planar mode may be determined using template matching, and the planar mode used for the current block among the vertical planar mode and the horizontal planar mode may be determined using template matching.

The encoding device may construct a reference sample of the current block (S710). The encoding device may generate a prediction sample of the current block based on the determined intra prediction mode of the current block and the constructed reference sample (S720).

In addition, as described above, the position-based intra prediction sample filtering may be applied to the prediction block generated according to the planar mode proposed in the present disclosure.

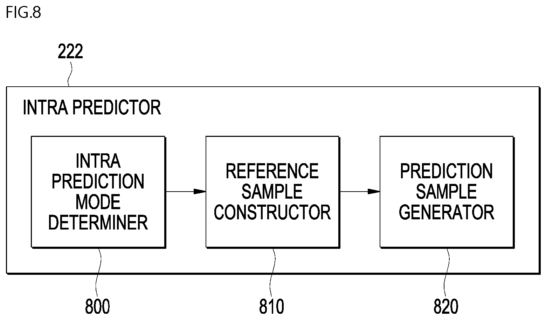

FIG. 8 schematically illustrates a configuration of the intra prediction unit 222 that performs an inter prediction method according to the present disclosure.

Referring to FIG. 8, the intra prediction unit 222 may include an intra prediction mode determiner 800, a reference sample constructor 810, and a prediction sample generator 820.

Specifically, the intra prediction mode determiner 800 may determine an intra prediction mode of a current block. The intra prediction mode of the current block may be determined from a plurality of predefined intra prediction modes.

As described above, the plurality of predefined intra prediction modes may include the horizontal planar mode and/or the vertical planar mode in addition to the conventional planar mode. In an embodiment, the horizontal planar mode and/or the vertical planar mode may be a prediction mode that utilizes only a part of the process of generating (or deriving) a prediction sample in the conventional planar mode.

As described above, when the horizontal planar mode is applied, the prediction sample of the current sample may be generated using the horizontal sample and the upper-right sample of the current sample within the current block. When the vertical planar mode is applied, the prediction sample of the current sample may be generated using the vertical sample and the lower-left sample of the current sample within the current block.

In addition, as described above with reference to Tables 1 to 9, a syntax element indicating whether the planar mode is used for the current block, a syntax indicating which of plurality of planar modes is applied to the current block, and the like may be signaled.

In addition, as described above, the mode proposed in the present disclosure may be determined based on whether the ISP is applied to the current block. As an example, the directional planar mode proposed in the present disclosure may be used for intra prediction of the current block only when the ISP is not applied.

In addition, as described above, a planar mode used for the current block among the plurality of planar modes may be specified based on a mode derived by the DIMD.

In addition, as described above with reference to FIG. 5, the planar mode applied to the current block among the plurality of planar modes may be determined using template matching. The planar mode used for the current block among the normal planar modes, the vertical planar mode, and the horizontal planar mode may be determined using template matching, and the planar mode used for the current block among the vertical planar mode and the horizontal planar mode may be determined using template matching.

The reference sample constructor 810 may construct a reference sample of the current block. The prediction sample generator 820 may generate the prediction sample of the current block based on the determined intra prediction mode of the current block and the constructed reference sample thereof.

In addition, as described above, the position-based intra prediction sample filtering may be applied to the prediction block generated according to the planar mode proposed in the present disclosure.

In the above-described embodiment, methods are described based on a flowchart as a series of steps or blocks, but a corresponding embodiment is not limited to the order of steps, and some steps may occur simultaneously or in different order with other steps as described above. In addition, those skilled in the art may understand that steps shown in a flowchart are not exclusive, and that other steps may be included or one or more steps in a flowchart may be deleted without affecting the scope of embodiments of the present disclosure.

The above-described method according to embodiments of the present disclosure may be implemented in a form of software, and an encoding apparatus and/or a decoding apparatus according to the present disclosure may be included in a device which performs image processing such as a TV, a computer, a smartphone, a set top box, a display device, etc.

In the present disclosure, when embodiments are implemented as software, the above-described method may be implemented as a module (a process, a function, etc.) that performs the above-described function. A module may be stored in a memory and may be executed by a processor. A memory may be internal or external to a processor, and may be connected to a processor by a variety of well-known means. A processor may include an application-specific integrated circuit (ASIC), another chipset, a logic circuit and/or a data processing device. A memory may include a read-only memory (ROM), a random access memory (RAM), a flash memory, a memory card, a storage medium and/or another storage device. In other words, embodiments described herein may be performed by being implemented on a processor, a microprocessor, a controller or a chip. For example, functional units shown in each drawing may be performed by being implemented on a computer, a processor, a microprocessor, a controller or a chip. In this case, information for implementation (ex. information on instructions) or an algorithm may be stored in a digital storage medium.

In addition, a decoding apparatus and an encoding apparatus to which embodiment(s) of the present disclosure are applied may be included in a multimedia broadcasting transmission and reception device, a mobile communication terminal, a home cinema video device, a digital cinema video device, a surveillance camera, a video conversation device, a real-time communication device like a video communication, a mobile streaming device, a storage medium, a camcorder, a device for providing video on demand (VoD) service, an over the top video (OTT) device, a device for providing Internet streaming service, a three-dimensional (3D) video device, a virtual reality (VR) device, an argumente reality (AR) device, a video phone video device, a transportation terminal (ex. a vehicle (including an autonomous vehicle) terminal, an airplane terminal, a ship terminal, etc.) and a medical video device, etc., and may be used to process a video signal or a data signal. For example, an over the top video (OTT) device may include a game console, a blu-ray player, an Internet-connected TV, a home theater system, a smartphone, a tablet PC, a digital video recorder (DVR), etc.

In addition, a processing method to which embodiment(s) of the present disclosure are applied may be produced in a form of a program executed by a computer and may be stored in a computer-readable recording medium. Multimedia data having a data structure according to embodiment(s) of the present disclosure may be also stored in a computer-readable recording medium. The computer-readable recording medium includes all types of storage devices and distributed storage devices that store computer-readable data. The computer-readable recording medium may include, for example, a blu-ray disk (BD), an universal serial bus (USB), ROM, PROM, EPROM, EEPROM, RAM, CD-ROM, a magnetic tape, a floppy disk and an optical media storage device. In addition, the computer-readable recording medium includes media implemented in a form of a carrier wave (e.g., transmission via the Internet). In addition, a bitstream generated by an encoding method may be stored in a computer-readable recording medium or may be transmitted through a wired or wireless communication network.

In addition, embodiment(s) of the present disclosure may be implemented by a computer program product by a program code, and the program code may be executed on a computer by embodiment(s) of the present disclosure. The program code may be stored on a computer-readable carrier.

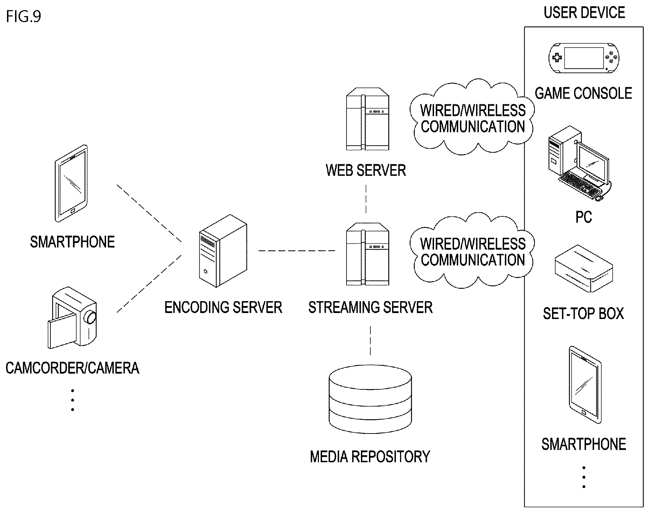

FIG. 9 is an example of a contents streaming system to which embodiments of the present disclosure may be applied.

Referring to FIG. 9, a contents streaming system to which embodiment(s) of the present disclosure are applied may largely include an encoding server, a streaming server, a web server, a media storage, a user device and a multimedia input device.

The encoding server generates a bitstream by compressing contents input from multimedia input devices such as a smartphone, a camera, a camcorder, etc. into digital data and transmits it to the streaming server. As another example, when multimedia input devices such as a smartphone, a camera, a camcorder, etc. directly generate a bitstream, the encoding server may be omitted.

The bitstream may be generated by an encoding method or a bitstream generation method to which embodiment(s) of the present disclosure are applied, and the streaming server may temporarily store the bitstream in a process of transmitting or receiving the bitstream.

The streaming server transmits multimedia data to a user device based on a user's request through a web server, and the web server serves as a medium to inform a user of what service is available. When a user requests desired service from the web server, the web server delivers it to a streaming server, and the streaming server transmits multimedia data to a user. In this case, the contents streaming system may include a separate control server, and in this case, the control server controls a command/a response between each device in the content streaming system.

The streaming server may receive contents from a media storage and/or an encoding server. For example, when contents is received from the encoding server, the contents may be received in real time. In this case, in order to provide smooth streaming service, the streaming server may store the bitstream for a certain period of time.

An example of the user device may include a mobile phone, a smart phone, a laptop computer, a digital broadcasting terminal, a personal digital assistants (PDAs), a portable multimedia players (PMP), a navigation, a slate PC, a Tablet PC, an ultrabook, a wearable device (e.g., a smartwatch, a smart glass, a head mounted display (HMD)), a digital TV, a desktop, a digital signage, etc.

Each server in the contents streaming system may be operated as a distributed server, and in this case, data received from each server may be distributed and processed.

The claims set forth herein may be combined in various ways. For example, a technical characteristic of a method claim of the present disclosure may be combined and implemented as a device, and a technical characteristic of a device claim of the present disclosure may be combined and implemented as a method. In addition, a technical characteristic of a method claim of the present disclosure and a technical characteristic of a device claim may be combined and implemented as a device, and a technical characteristic of a method claim of the present disclosure and a technical characteristic of a device claim may be combined and implemented as a method.

**Claims**

1. An image decoding method comprising:

   deriving an intra prediction mode of a current block;
   constructing reference samples of the current block; and
   generating a prediction sample of the current block based on the intra prediction mode and the reference samples,
   wherein the intra prediction mode is derived from a plurality of predefined intra prediction modes, and
   the plurality of predefined intra prediction modes include a normal planar mode, a horizontal planar mode, and a vertical planar mode.

2. The image decoding method according to claim 1, wherein the horizontal planar mode represents a mode for generating a prediction sample of a current sample in the current block using a horizontal sample and an upper-right sample of the current sample,

the horizontal sample represents a sample horizontally adjacent to the current sample among the reference samples, and
the upper-right sample represents a sample adjacent to an upper-right corner of the current block among the reference samples.

3. The image decoding method according to claim 1, wherein the vertical planar mode represents a mode for generating a prediction sample of a current sample in the current block using a vertical sample and a lower-left sample of the current sample,

the vertical sample represents a sample vertically adjacent to the current sample among the reference samples, and
the lower-left sample represents a sample adjacent to a lower-left corner of the current block among the reference samples.

4. The image decoding method according to claim 1, wherein the deriving of the intra prediction mode of the current block includes obtaining a first flag indicating whether the normal planar mode is used for the current block.

5. The image decoding method according to claim 4, wherein the deriving of the intra prediction mode of the current block further includes obtaining a second flag indicating an intra prediction mode used for the current block among the horizontal planar mode or the vertical planar mode when the first flag indicates that the normal planar mode is not used for the current block.

6. The image decoding method according to claim 4, wherein whether to obtain the first flag is determined based on whether intra sub-partitions (ISP) are applied to the current block.

7. The image decoding method according to claim 1, wherein the deriving of the intra prediction mode of the current block includes:

deriving an intra derivation mode based on decoder-side intra mode derivation (DIMD); and
selecting one of the horizontal planar mode and the vertical planar mode based on the intra derivation mode.

8. The image decoding method according to claim 7, wherein, when the intra derivation mode is a horizontal directional mode, the intra prediction mode of the current block is derived as the horizontal planar mode, and
when the intra derivation mode is a vertical directional mode, the intra prediction mode of the current block is derived as the vertical planar mode.

9. The image decoding method according to claim 1, wherein the deriving of the intra prediction mode of the current block includes sorting an order of the plurality of predefined intra prediction modes based on a cost calculated by a template matching method.

10. An image encoding method comprising:

determining an intra prediction mode of a current block;
constructing reference samples of the current block; and
generating a prediction sample of the current block based on the intra prediction mode and the reference samples,
wherein the intra prediction mode is determined from a plurality of predefined intra prediction modes, and
the plurality of predefined intra prediction modes include a normal planar mode, a horizontal planar mode, and a vertical planar mode.

11. A computer-readable storage medium configured to store a bitstream generated by the image encoding method according to claim 10.

12. A method of transmitting data about image information, comprising:

determining an intra prediction mode of a current block;
constructing reference samples of the current block;
generating a prediction sample of the current block based on the intra prediction mode and the reference samples;
generating a bitstream by encoding the current block based on the prediction sample; and
transmitting data including the bitstream,
wherein the intra prediction mode is derived from a plurality of predefined intra prediction modes, and
the plurality of predefined intra prediction modes include a normal planar mode, a horizontal planar mode, and a vertical planar mode.

FIG.1

| SOURCE DEVICE | RECEIVING DEVICE |
| --- | --- |
| VIDEO SOURCE | RENDERER |
| ENCODING APPARATUS | DECODING APPARATUS |
| TRANSMITTER | RECEIVER |

FIG.2

EP 4 564 810 A1

FIG.3

DECODING APPARATUS 300

BITSTREAM → ENTROPY DECODER (310) → DEQUANTIZER (321) → INVERSE TRANSFORMER (322) | 320 → (+) 340 → FILTER (350) → RECONSTRUCTED IMAGE (PICTURE)

INTRA PREDICTOR (331)

INTER PREDICTOR (332) | 330

MEMORY (360)

DPB

EP 4 564 810 A1

FIG.4

```
┌─────────────────────────────────────┐
│   DERIVE INTRA PREDICTION MODE       │─~S400
└─────────────────────────────────────┘
                   │
                   ▼
┌─────────────────────────────────────┐
│   CONSTRUCT REFERENCE SAMPLE         │─~S410
└─────────────────────────────────────┘
                   │
                   ▼
┌─────────────────────────────────────┐
│   GENERATE PREDICTION SAMPLE         │─~S420
└─────────────────────────────────────┘
```

FIG.5

template

template reference region

template size

coding block

FIG.6

331

INTRA PREDICTOR

| INTRA PREDICTION MODE DERIVER | REFERENCE SAMPLE CONSTRUCTOR | PREDICTION SAMPLE GENERATOR |

600        610        620

FIG.7

```
┌─────────────────────────────────────┐
│  DETERMINE INTRA PREDICTION MODE     │──S700
└─────────────────────────────────────┘
                  │
                  ▼
┌─────────────────────────────────────┐
│     CONSTRUCT REFERENCE SAMPLE       │──S710
└─────────────────────────────────────┘
                  │
                  ▼
┌─────────────────────────────────────┐
│     GENERATE PREDICTION SAMPLE       │──S720
└─────────────────────────────────────┘
```

FIG.8

222

**INTRA PREDICTOR**

| INTRA PREDICTION MODE DETERMINER | → | REFERENCE SAMPLE CONSTRUCTOR | → | PREDICTION SAMPLE GENERATOR |

800  810  820

FIG.9

USER DEVICE

GAME CONSOLE

WIRED/WIRELESS COMMUNICATION

WEB SERVER

SMARTPHONE

PC

CAMCORDER/CAMERA

ENCODING SERVER

STREAMING SERVER

WIRED/WIRELESS COMMUNICATION

SET-TOP BOX

MEDIA REPOSITORY

SMARTPHONE

## INTERNATIONAL SEARCH REPORT

| International application No. |
| --- |
| **PCT/KR2023/010968** |

| A. | CLASSIFICATION OF SUBJECT MATTER |
| --- | --- |

**H04N 19/11**(2014.01)i; **H04N 19/593**(2014.01)i; **H04N 19/59**(2014.01)i; **H04N 19/70**(2014.01)i; **H04N 19/117**(2014.01)i; **H04N 19/176**(2014.01)i; **H04N 19/105**(2014.01)i; **H04N 19/132**(2014.01)i

According to International Patent Classification (IPC) or to both national classification and IPC

| B. | FIELDS SEARCHED |
| --- | --- |

Minimum documentation searched (classification system followed by classification symbols)

H04N 19/11(2014.01); H04N 19/105(2014.01); H04N 19/119(2014.01); H04N 19/122(2014.01); H04N 19/154(2014.01); H04N 19/593(2014.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 복호화(decoding), 인트라(intra), 예측(predict), 참조(reference), 샘플(sample), 평면 (planar), 수직(vertical), 수평(horizontal)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | US 2019-0166370 A1 (VID SCALE, INC.) 30 May 2019 (2019-05-30)<br>See paragraphs [0008], [0022], [0049], [0078]-[0079], [0171] and [0173]; claims 1-6 and 19; and figures 3, 7, 13 and 15. | 1-12 |
| Y | LI, Xinwei et al. Non-EE2: On planar horizontal mode and planar vertical mode. JVET-AA0104-v2, Joint Video Experts Team (JVET) of ITU-T SG 16 WP 3 and ISO/IEC JTC 1/SC 29, 27th Meeting, by teleconference. pp. 1-3, 18 July 2022.<br>See pages 1-2; and figure 1. | 1-12 |
| Y | KR 10-2020-0145749 A (ELECTRONICS AND TELECOMMUNICATIONS RESEARCH INSTITUTE et al.) 30 December 2020 (2020-12-30)<br>See paragraphs [0020] and [0460]. | 6 |
| A | KR 10-2019-0084560 A (KAONMEDIA CO., LTD. et al.) 17 July 2019 (2019-07-17)<br>See paragraphs [0060], [0117], [0131], [0140] and [0297]; and claim 9. | 1-12 |

[✓] Further documents are listed in the continuation of Box C.    [✓] See patent family annex.

| | | |
| --- | --- | --- |
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
| --- | --- |
| **27 October 2023** | **27 October 2023** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

International application No.

**PCT/KR2023/010968**

| C. | DOCUMENTS CONSIDERED TO BE RELEVANT | |
|---|---|---|
| Category* | Citation of document, with indication, where appropriate, of the relevant passages | Relevant to claim No. |
| A | KR 10-2017-0125154 A (KWANGWOON UNIVERSITY INDUSTRY-ACADEMIC COLLABORATION FOUNDATION et al.) 14 November 2017 (2017-11-14) See paragraphs [0020]-[0021], [0041]-[0043] and [0059]; claims 1 and 4; and figures 5 and 10. | 1-12 |

Form PCT/ISA/210 (second sheet) (July 2022)

**INTERNATIONAL SEARCH REPORT**
Information on patent family members

International application No.

**PCT/KR2023/010968**

| Patent document cited in search report | | | Publication date (day/month/year) | Patent family member(s) | | | Publication date (day/month/year) |
|---|---|---|---|---|---|---|---|
| US | 2019-0166370 | A1 | 30 May 2019 | EP | 3453174 | A1 | 13 March 2019 |
| | | | | US | 11722677 | B2 | 08 August 2023 |
| | | | | WO | 2017-192995 | A1 | 09 November 2017 |
| KR | 10-2020-0145749 | A | 30 December 2020 | CN | 114342372 | A | 12 April 2022 |
| | | | | EP | 3989548 | A1 | 27 April 2022 |
| | | | | US | 2022-0312003 | A1 | 29 September 2022 |
| | | | | WO | 2020-256466 | A1 | 24 December 2020 |
| KR | 10-2019-0084560 | A | 17 July 2019 | KR | 10-2520405 | B1 | 10 April 2023 |
| | | | | WO | 2019-135658 | A1 | 11 July 2019 |
| KR | 10-2017-0125154 | A | 14 November 2017 | CN | 109155857 | A | 04 January 2019 |
| | | | | CN | 109155857 | B | 30 May 2023 |
| | | | | KR | 10-2017-0113947 | A | 13 October 2017 |
| | | | | US | 11438591 | B2 | 06 September 2022 |
| | | | | US | 2022-0360780 | A1 | 10 November 2022 |
| | | | | WO | 2017-155334 | A1 | 14 September 2017 |

Form PCT/ISA/210 (patent family annex) (July 2022)